(19) Europäisches Patentamt / European Patent Office / Office européen des brevets

(11) **EP 3 842 871 B1**

(12) **FASCICULE DE BREVET EUROPEEN**

(45) Date de publication et mention
de la délivrance du brevet:
**30.07.2025 Bulletin 2025/31**

(21) Numéro de dépôt: **20217126.0**

(22) Date de dépôt: **23.12.2020**

(51) Classification Internationale des Brevets (IPC):
**G03H 1/04** *(2006.01)* **G03H 1/00** *(2006.01)*

(52) Classification Coopérative des Brevets (CPC):
**G03H 1/0493;** G03H 2001/0033; G03H 2001/005;
G03H 2210/55; G03H 2222/13; G03H 2222/15;
G03H 2223/23

(54) **DISPOSITIF DE DÉTECTION D OBJETS PAR HOLOGRAPHIE**

VORRICHTUNG ZUR OBJEKTERKENNUNG DURCH HOLOGRAFIE

DEVICE FOR DETECTING OBJECTS BY HOLOGRAPHY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.12.2019 FR 1915636**

(43) Date de publication de la demande:
**30.06.2021 Bulletin 2021/26**

(73) Titulaire: **Commissariat à l'Energie Atomique et
aux Energies
Alternatives
75015 Paris (FR)**

(72) Inventeur: **CONSTANCIAS, Christophe
38054 Grenoble Cedex 09 (FR)**

(74) Mandataire: **Hautier IP
20, rue de la Liberté
06000 Nice (FR)**

(56) Documents cités:
**US-A1- 2017 082 975**

## Description

### DOMAINE TECHNIQUE

La présente invention concerne le domaine de la détection et de l'analyse d'objets par imagerie holographique. Elle trouve pour application particulièrement avantageuse le domaine de la détection et l'analyse des objets de petites tailles tels que des particules.

L'invention peut ainsi être exploitée dans les domaines non limitatifs suivants : le contrôle de la qualité de l'air, la détection d'espèces microbiologiques, la détection de poudre d'explosifs ainsi que les systèmes d'alarme tels que ceux identifiant les particules de fumée pour détecter les incendies.

### ETAT DE LA TECHNIQUE

L'imagerie holographique d'un objet, basée sur l'enregistrement d'un hologramme avec un capteur d'image, puis la reconstruction numérique de l'objet sont couramment utilisées pour analyser un échantillon afin d'identifier et caractériser des particules ou des objets microscopiques présents dans l'échantillon.

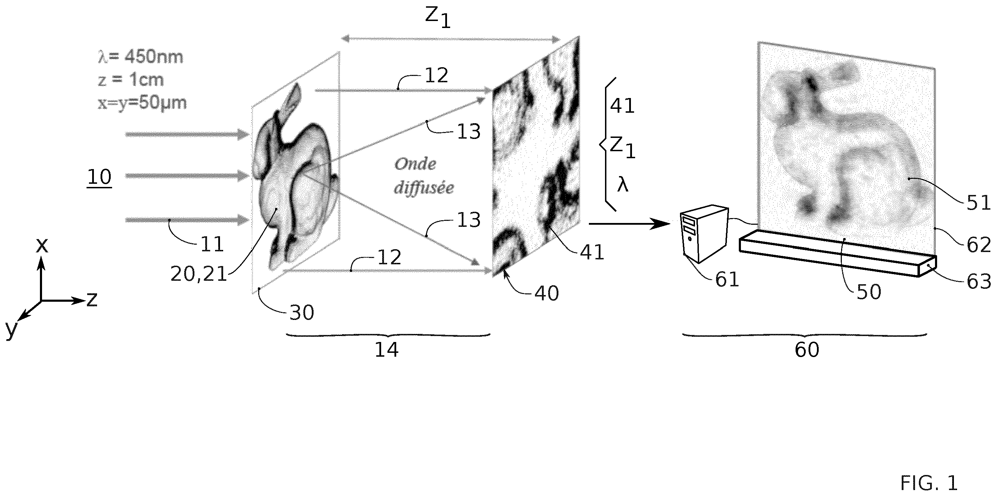

Comme illustrée en figure 1, cette technique permet d'observer un échantillon en le disposant entre une source 10 de lumière et un capteur 40 d'image, sans disposer de lentille de grossissement optique entre l'échantillon 20 et le capteur 40 d'image. Ainsi, le capteur 40 collecte une image 41 de l'onde lumineuse transmise par l'échantillon. Cette image, également appelée hologramme, est formée de figures d'interférences entre une onde 11 lumineuse, dite de référence, émise par la source 10 et transmise par l'échantillon 20, et des ondes de diffraction 13, résultant de la diffraction par l'échantillon 20 de l'onde lumineuse 11 émise par la source 10. Ces figures d'interférences sont parfois dénommées figures de diffraction, ou désignées par le terme anglais « diffraction pattern ». Si l'on effectue une reconstruction holographique de l'échantillon à l'aide d'un système informatique 60, on peut afficher sur un écran 62 une image 50 de l'objet reconstruit 50 numériquement.

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes.

Le document intitulé "Practical algorithms for simulation and reconstruction of digital in-line holograms" (Applied Optics, Vol. 54, Issue 9, pp. 2424-2434 (2015) DOI: 10.1364/AO.54.002424) ou le document US2012/0218379, décrivent notamment des algorithmes de reconstruction holographiques qui, appliqués à l'image formée sur le détecteur, permettent de reconstruire l'image de l'échantillon dans différents plans de reconstruction.

Ainsi, l'imagerie holographique permet d'observer un échantillon comportant des particules, sur la base de figures élémentaires formées par chaque particule sous l'effet d'une illumination par une onde incidente.

Cependant, les solutions connues ne présentent pas une résolution suffisante pour identifier des échantillons comportant des particules dispersées et de dimensions proches de la longueur d'onde d'éclairement. Il n'est alors pas possible de détecter, d'identifier ou de caractériser ces objets de petites tailles.

Les solutions connues de reconstruction holographique ne permettent pas non plus l'identification morphologique, (par exemple, forme externe et structure) de particules de petites dimensions, proches de la longueur d'onde ou sub-longueur d'onde.

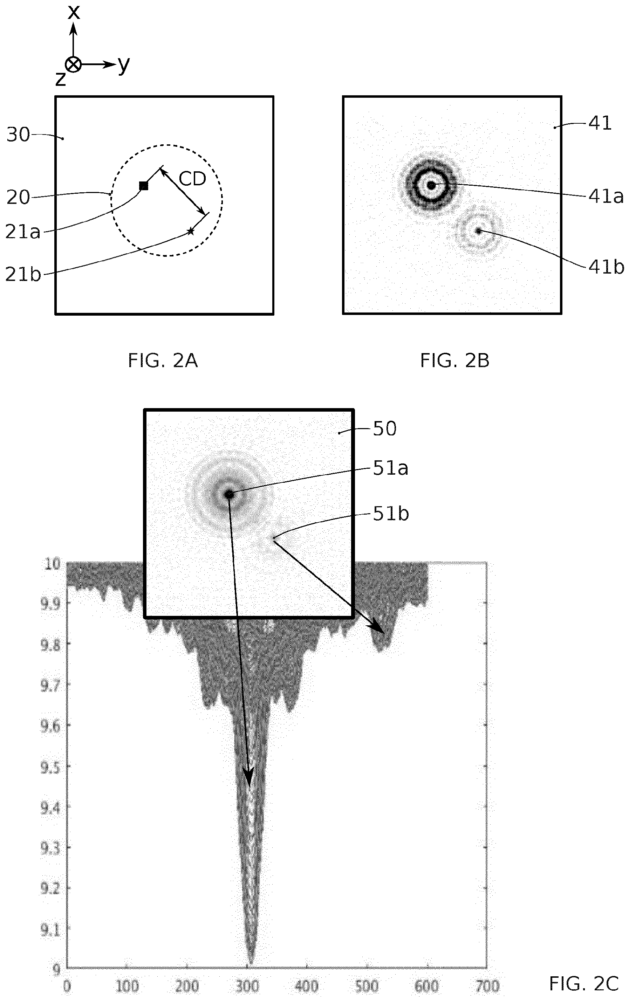

Cette problématique est illustrée en figures 2A à 2C.

La figure 2A illustre un échantillon 20 comportant des objets tels que des particules 21a, 21b sombres. Dans cet échantillon, les dimensions critiques CD sont très largement supérieures à la longueur d'onde $\lambda$ du rayonnement émis par la source. En effet, une dimension critique CD définie par la distance entre les deux particules 21a et 21b est telle que CD = $2\mu m$ ($10^{-6}$ mètres), ce qui est très supérieur à la longueur d'onde $\lambda$ = 450 nm ($10^{-9}$ mètres) de l'onde incidente 11. Dans cet exemple, le support 30 présente des dimensions X et Y selon les axes x et y, telles que X = Y = $50\mu m$.

Cet échantillon 20 est placé à proximité d'un support 30 présentant un fond clair. Un capteur 40, placé à une distance Z1 = 1,1 cm ($10^{-2}$ mètres) du support 30 portant l'échantillon 20, collecte des ondes diffusées 13 par les particules 21a, 21b et des ondes non diffusées 12 par les particules. La recombinaison de ces ondes forme sur le capteur 40 la figure d'interférence, i.e., l'hologramme 41 illustré en figure 2B.

Il est possible de distinguer sur cet hologramme 41 les particules 21a et 21b. Si l'on effectue une reconstruction holographique de l'échantillon, en appliquant l'une des méthodes de reconstruction mentionnées dans l'état de la technique ci-dessus, on obtient le résultat illustré en figure 2C. Cette image, qualifiée d'objet reconstruit, permet également d'identifier les particules 21a et 21b. Il est possible de compter les particules. Le graphique de la figure 2C qui illustre l'intensité lumineuse en fonction de la position sur l'axe y permet d'identifier la particule 51a et sa position. La particule 51b peut éventuellement être décelée.

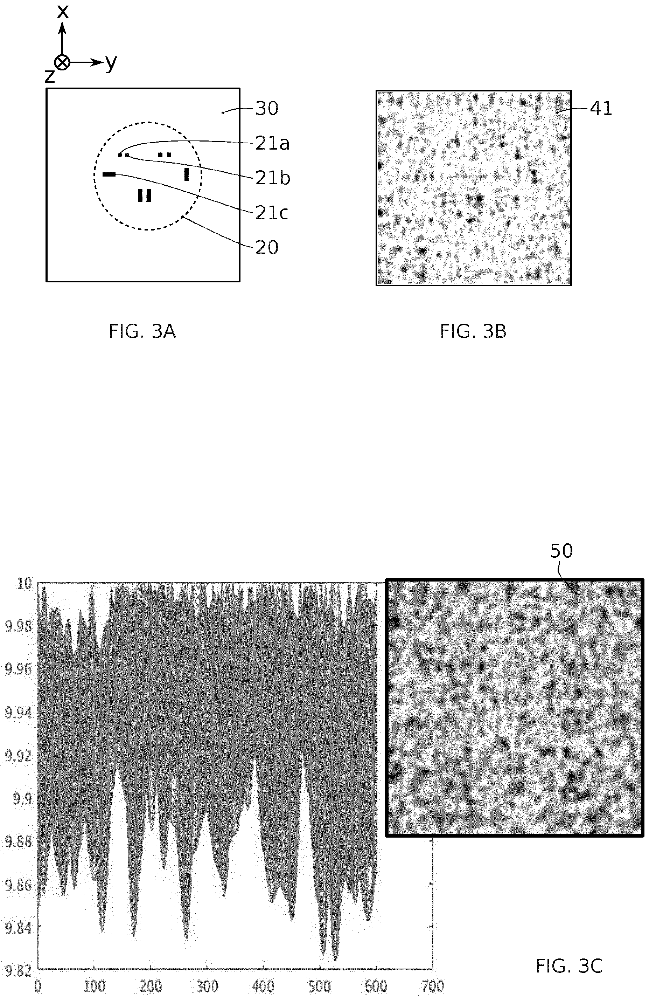

Le résultat est tout autre si les dimensions critiques des objets contenus dans l'échantillon sont proches ou inférieures à la longueur d'onde du rayonnement émis par la source. Ce problème est illustré avec les figures 3A à 3C.

La figure 3A illustre un échantillon 20 comportant des particules 21a-21c sombres. Dans cet échantillon, les dimensions critiques CD sont inférieures à la longueur d'onde $\lambda$ du rayonnement émis par la source. Dans cet exemple, une dimension critique est la distance entre les deux particules 21a et 21b. Ici, cette distance est égale à 189 nm. Une autre dimension critique est la largeur de la particule 21c. Dans cet exemple, la longueur d'onde $\lambda$ = 450 nm ($10^{-9}$ mètres). Le support 30 présente des dimensions X et Y selon les axes x et y, telles que X = Y = 1000$\mu$m ($10^{-6}$ mètres). La distance Z1 entre le support 30 portant l'échantillon 20 et le capteur 40 est égale à 1 cm.

L'hologramme 41 formé sur le capteur 40 est illustré en figure 2B. Il n'est pas possible de distinguer sur cet hologramme 41 les particules 21a-21c.

Si l'on effectue une reconstruction holographique de l'échantillon on obtient un objet reconstruit numériquement illustré en figure 3C. Cette image ne permet pas non plus d'identifier les particules 21a-21c. A fortiori, il est impossible de les compter et encore moins de les caractériser. Le graphique de la figure 3C qui illustre l'intensité lumineuse en fonction de la position sur l'axe y ne permet pas non plus d'identifier les particules. En pratique, on s'aperçoit que la limite de résolution d'un tel système est de 2$\lambda$, i.e., si une dimension critique de l'échantillon 20 est inférieure ou égale à 2$\lambda$, alors cette dimension critique n'est plus identifiable.

On remarque que, si la taille des objets avait été bien supérieure, sans présenter de dimensions critiques, mais que la distance entre deux objets était proche ou inférieure à la longueur d'onde, ces deux objets n'apparaîtraient pas comme distincts sur l'hologramme ou sur l'objet reconstruit.

Il existe donc un besoin consistant à proposer une solution pour limiter, voire supprimer, les inconvénients des solutions connues. En particulier, il existe un besoin consistant à permettre la détection, voire le comptage ou l'identification d'objets de petites dimensions, c'est-à-dire présentant des dimensions critiques proches de la longueur d'onde ou inférieures à cette dernière.

Les autres objets, caractéristiques et avantages de la présente invention apparaîtront à l'examen de la description suivante et des dessins d'accompagnement. Il est entendu que d'autres avantages peuvent être incorporés.

## <u>RESUME</u>

Pour atteindre cet objectif, selon un mode de réalisation, on prévoit un dispositif de détection d'au moins un objet par exemple présent dans un échantillon, le dispositif comportant :

- une source de lumière configurée pour émettre des ondes incidentes à une longueur d'onde $\lambda$,
- un volume de détection destiné à recevoir l'objet, et à recevoir les ondes incidentes,

- un capteur d'image, positionné pour recevoir au moins des ondes lumineuses diffusées obtenue par diffusion des ondes incidentes sur l'objet et une onde de référence issue de la source et n'ayant pas diffusé sur l'objet et pour générer une image holographique fonction au moins des ondes lumineuses diffusées et des ondes de référence,
- un dispositif informatique de traitement de données configuré pour, selon un mode de réalisation, reconstruire numériquement l'objet en fonction au moins de l'image holographique et de la longueur d'onde $\lambda$.

Le dispositif de détection comprend également un support comprenant des motifs organisés pour former au moins un réseau de diffraction. Les motifs de l'au moins un réseau sont organisés de manière périodique selon un pas P, tel que $\lambda/2 \leq P \leq 2\lambda$.

Le support est configuré de sorte que les ondes diffusées collectées par le capteur comprennent soit:

- des ondes issues de la source qui ont été diffusées par l'objet sans être diffractées par l'au moins un réseau de diffraction, et aussi,
- des ondes issues de la source qui ont à la fois été diffractées par l'au moins un réseau de diffraction et à la fois été diffusées par l'objet.

Les ondes de référence sont des ondes incidentes ayant ou non été diffractées par le réseau de diffraction.

Le dispositif informatique est configuré pour reconstruire numériquement l'objet en fonction, en plus de l'image holographique et de la longueur d'onde $\lambda$, d'une distance Z1 entre le support et le capteur d'image, la distance Z1 étant de préférence prise selon un axe de propagation z de l'onde incidente.

Ainsi, le dispositif de détection est configuré de sorte que le capteur collecte :

- des ondes issues de la source qui ont à la fois été diffractées par l'au moins un réseau de diffraction et à la fois été diffusées par l'objet, et
- des ondes issues de la source qui ont été diffusées par l'objet sans être diffractées par l'au moins un réseau de diffraction,
- des ondes issues de la source qui n'ont pas été diffusées par l'objet.

Ainsi, le réseau de diffraction dont la période est proche de la longueur d'onde $\lambda$ incidente, permet d'augmenter l'interaction entre la lumière et l'objet telle qu'une particule. Le capteur d'image collecte plus de lumière diffusée par l'objet. A la lumière diffusée par l'objet et transmise par le réseau s'ajoute la lumière diffusée par l'objet et diffractée par le réseau.

Ainsi, le réseau de diffraction porté par le support agit comme un filtre spatial qui augmente la résolution de la reconstruction de l'objet à partir de l'image captée par le capteur, c'est-à-dire à partir de l'hologramme.

Le dispositif selon l'invention permet une résolution de dimensions critiques de l'ordre de la longueur d'onde $\lambda$, voire inférieure à la longueur d'onde $\lambda$. Typiquement, le dispositif offre une très bonne résolution pour des dimensions critiques supérieure à $\lambda/4$.

Le dispositif proposé permet ainsi de :

- distinguer, et donc par exemple de compter, des particules séparées d'une distance de l'ordre de la longueur d'onde $\lambda$ voire inférieure à la longueur d'onde $\lambda$ sans risque de considérer qu'il s'agit d'une unique particule de plus grosse taille,
- d'identifier des particules dont la taille est de l'ordre de la longueur d'onde $\lambda$, voire inférieure à la longueur d'onde $\lambda$.

Le dispositif proposé permet également de réaliser un comptage et une identification morphologique d'objets plus gros, dont la taille est typiquement supérieure à $10\lambda$. Tel est, par exemple, le cas des pollens et des moisissures. En outre, la présente invention permet de lever des contraintes sur la position de l'objet à analyser. En effet, l'objet à analyser ne doit pas nécessairement être au contact du support.

Selon un deuxième mode de réalisation, qui peut être alternatif ou combiné au premier mode de réalisation dans lequel le dispositif informatique de traitement de données est configuré pour reconstruire numériquement l'objet, le dispositif informatique de traitement de données est configuré pour effectuer un comptage des objets présents dans le volume de détection. Pour cela on applique des filtres à l'hologramme généré afin de singulariser les différentes particules.

De manière facultative, le dispositif selon l'invention peut en outre présenter au moins l'une quelconque des caractéristiques suivantes qui peuvent être prises séparément ou en combinaison:

Selon un exemple, le dispositif ne comporte pas d'optique de grossissement entre le support et le capteur d'image.

Selon un exemple, le réseau présente un pas P compris entre 0,75*$\lambda$ et 1,5*$\lambda$. De préférence, le réseau présente un pas P égal à $\lambda$.

L'invention trouve pour application particulièrement avantageuse, mais non limitative, le contrôle de la qualité de l'air, la détection d'espèces microbiologiques, la détection de poudre d'explosifs ainsi que les systèmes d'alarme tels que ceux identifiant les particules de fumée pour détecter les incendies.

La présente invention concerne aussi un système comprenant un dispositif de détection selon l'invention dans lequel le système est pris parmi :

- un système d'alarme anti-incendie,
- un système de détection d'incendie,
- un système d'analyse de la qualité d'un fluide tel que l'air ou l'eau,
- un système d'alarme anti-pollution,
- un système de détection de poudre d'explosifs,
- un système de détection d'espèces microbiologiques,
- un système d'analyse de l'ADN,
- un système d'analyse de pollens,
- un système d'analyse de moisissures.

Selon un mode de réalisation, on prévoit un dispositif de détection d'au moins un objet, par exemple présent dans un échantillon, le dispositif comportant :

- un capteur d'image, positionné pour recevoir au moins des ondes lumineuses diffusées obtenues par diffraction sur l'objet d'ondes incidentes de longueur d'onde $\lambda$ émises par une source et des ondes de référence issues de la source et n'ayant pas diffractées sur l'objet et pour générer une image holographique fonction au moins des ondes lumineuses diffusées et des ondes de référence.

Le dispositif comprend également un support comprenant des motifs organisés pour former au moins un réseau de diffraction. Les motifs de l'au moins un réseau sont organisés de manière périodique selon un pas P, tel que $\lambda/2 \leq P \leq 2\lambda$.

Le dispositif de détection est configuré de sorte que le capteur collecte au moins :

- des ondes issues de la source qui ont à la fois été diffractées par l'au moins un réseau de diffraction et à la fois été diffusées par l'objet, et
- des ondes issues de la source qui ont été diffusées par l'objet sans être diffractées par l'au moins un réseau de diffraction,
- des ondes issues de la source qui n'ont pas été diffusées par l'objet.

Le dispositif peut ou non comprendre la source.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente, de manière schématique, un dispositif de détection par imagerie holographique selon l'état de la technique.
Les figure 2A à 2C illustrent les résultats obtenus, avec un dispositif de détection selon l'état de la technique, pour analyser un premier échantillon.
Les figures 3A à 3C illustrent les résultats obtenus, avec un dispositif de détection selon l'état de la technique, pour analyser un deuxième échantillon.

La figure 4 représente, de manière schématique, un exemple de dispositif de détection par imagerie holographique selon un mode de réalisation de la présente invention.

Les figures 5A à 5C, illustrent les résultats obtenus en analysant le même échantillon que pour les figure 2A à 2C, mais avec un dispositif selon l'invention.

La figure 6 représente, de manière schématique, un exemple de réseau de diffraction en deux dimensions équipant un dispositif de détection selon la présente invention.

La figure 7A illustre les résultats obtenus en analysant un échantillon avec un dispositif selon l'état de la technique.

Les figures 7B à 7D, illustrent les résultats obtenus en analysant le même échantillon que pour la figure 7A, mais avec des dispositifs selon l'invention présentant des réseaux dont les géométries sont identiques à celui de la figure 6, mais dont les périodes varies.

La figure 8A représente, de manière schématique, un exemple de réseau de diffraction en une dimension équipant un dispositif de détection selon la présente invention.

Les figures 8B et 8C, illustrent les résultats obtenus en analysant le même échantillon que pour les figures 7A à 7D, mais avec le dispositif de la figure 8A intégrant un réseau unidimensionnel.

Les figures 9A à 9C représentent les résultats obtenus en analysant un même échantillon avec des réseaux présentant des périodes identiques mais présentant des taux de recouvrement différents.

Les figures 10A à 10E illustrent un dispositif de détection comprenant deux réseaux périodiques distincts ainsi que les résultats obtenus avec ce dispositif.

Les figures 11A à 11C illustrent les résultats obtenus avec un dispositif de détection comprenant quatre réseaux périodiques distincts.

Les figures 12A à 12C illustrent un dispositif de détection comprenant deux réseaux périodiques entrelacés ainsi que les résultats obtenus avec ce dispositif.

La figure 13A illustre une image holographique obtenue avec un dispositif dont le capteur d'image présente une certaine dimension. Les figures 13B et 13C représentent les résultats obtenus par reconstruction numérique de l'image holographique de la figure 13A.

La figure 14A illustre une image holographique obtenue avec un dispositif dont le capteur d'image présente des dimensions différentes de celles du capteur d'image de la figure 13A. Les figures 14B et 14C représentent les résultats obtenus par reconstruction numérique de l'image holographique de la figure 14A.

La figure 15A illustre une image holographique obtenue avec un dispositif dont le capteur d'image présente des dimensions différentes de celles des capteurs d'image des figures 13A et 14A. Les figures 15B et 15C représentent les résultats obtenus par reconstruction numérique de l'image holographique de la figure 15A.

Les figures 16A à 16C sont des photos, réalisées par microscope électronique à balayage, de plusieurs objets à analyser.

La figure 17 illustre, de manière schématique, un dispositif selon l'état de la technique utilisé pour analyser les objets des figures 16A à 16C.

Les figures 18A à 18D illustrent un dispositif de détection selon l'invention comprenant deux réseaux de diffraction ainsi que les résultats obtenus avec ce dispositif pour analyser les objets des figures 16A à 16C.

Les figures 19A à 19C illustrent un autre dispositif de détection selon l'invention ainsi que les résultats obtenus avec ce dispositif pour analyser un brin d'ADN.

Les figures 20A à 20C illustrent un autre dispositif de détection selon l'invention, comprenant un réseau unidimensionnel, ainsi que les résultats obtenus avec ce dispositif pour analyser un brin d'ADN.

La figure 21 illustre, de manière schématique, un support structuré pour un dispositif de détection selon l'invention.

Les figures 22A à 22C illustrent des exemples particuliers de support comprenant des réseaux de diffraction. Dans ces exemples, les motifs des réseaux sont séparés par des ouvertures.

La figure 23 représente, de manière schématique, un exemple de dispositif de détection par imagerie holographique comprenant plusieurs réseaux de diffraction disposés en série.

La figure 24 représente, de manière schématique, une portion d'un exemple de dispositif de détection par imagerie holographique selon l'état de la technique.

La figure 25 représente, de manière schématique, une portion d'un exemple de dispositif de détection par imagerie holographique selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives des objets à analyser et des différents motifs des réseaux ne sont pas représentatives de la réalité.

## DESCRIPTION DETAILLEE

Avant d'entamer une revue détaillée de modes de réalisation de l'invention, sont énoncées ci-après des caractéristiques optionnelles qui peuvent éventuellement être utilisées en association ou alternativement :

Selon un exemple, le réseau s'étend dans un plan xy perpendiculaire à l'axe de propagation z.

L'onde de référence correspond à l'onde incidente n'ayant pas diffusé sur l'objet.

Une onde collectée par le capteur après avoir à la fois été diffractée par l'au moins un réseau de diffraction et à la fois été diffusée par l'objet signifie que cette même onde a soit été premièrement diffusée par l'objet puis diffractée par le réseau ou inversement qu'elle a été premièrement diffusée par le réseau puis diffractée par l'objet.

Selon un exemple, le support est disposé entre le volume de détection et le capteur d'image. Ainsi, des ondes sont diffusées par l'objet puis diffractées par le réseau. Selon un mode de réalisation alternatif, le volume de détection est disposé entre le support et le capteur d'image. Ainsi, des ondes sont diffractées par le réseau puis sont diffusées par l'objet.

Selon un exemple, le réseau est un réseau de lignes droites parallèles. Ainsi, il s'agit d'un réseau en une dimension. Selon un exemple, les lignes droites s'étendent dans le plan du support. Ce mode de réalisation présente pour avantage d'être particulièrement simple et peu coûteux à réaliser. En outre, lorsque les lignes forment des nervures et des tranchées, il est possible de disposer à l'intérieur des tranchées les objets que l'on souhaite réaliser. Cela permet de maîtriser avec plus grande précision leur position. Par ailleurs, cela permet de conserver leur position lors de manipulations ou de transports.

Selon un autre exemple, le réseau est un réseau en deux dimensions, selon une première dimension du réseau, prise dans le plan xy, le réseau présente un pas Pa et selon une deuxième dimension du réseau, prise dans le plan xy et perpendiculairement à la première dimension, le réseau présente un pas Pb, avec Pa et Pb tels que $\lambda/2 \leq Pa \leq 2\lambda$ et $\lambda/2 \leq Pb \leq 2\lambda$. Selon un exemple, Pa = Pb, de préférence, le réseau en deux dimensions comprend ou est formé de motifs ponctuels, la distance entre deux motifs ponctuels correspondant au pas P = Pa = Pb du réseau. Ce mode de réalisation présente pour avantage que les motifs du réseau occupent une surface moins importante que les motifs d'un réseau en une dimension. Le support portant un réseau deux dimensions est donc plus transparent qu'un support portant un réseau une dimension. Cela permet d'améliorer le contraste et le rapport signal sur bruit.

Selon un exemple, le support comprend des motifs organisés de sorte à former au moins deux réseaux de diffraction périodiques, parmi lesquels un premier réseau présentant un pas Pa, et un deuxième réseau présentant un pas Pb, avec Pa et Pb tels que $Pa \neq Pb$, $\lambda/2 \leq Pa \leq 2\lambda$ et $\lambda/2 \leq Pb \leq 2\lambda$. Selon un exemple, la source de lumière est configurée pour émettre au moins une première onde incidente et une deuxième onde incidente, présentant respectivement une longueur d'onde $\lambda a$ et $\lambda b$, telles que $\lambda a/2 \leq Pa \leq 2\lambda a$ et $\lambda b/2 \leq Pb \leq 2\lambda b$, de préférence $0,75*\lambda a/2 \leq Pa \leq 1,5*\lambda a$ et $0,75*\lambda b/2 \leq Pb \leq 1,5*\lambda b$ et de préférence $\lambda a = Pa$ et $\lambda b = Pb$.

Selon un mode de réalisation, la première et la deuxième ondes sont émises simultanément par la source. Selon un autre mode de réalisation, la première et la deuxième ondes sont émises successivement par la source. Ce mode de réalisation permet d'obtenir plusieurs images, chaque image correspondant à une longueur d'onde d'analyse. Cela permet ainsi une analyse chimique selon l'absorption moléculaire des composants constitutifs des particules. Par exemple, $\lambda a$ appartient au domaine de l'infrarouge et $\lambda b$ appartient au domaine des ultraviolets.

Selon un exemple, les au moins deux réseaux sont situés sur des zones distinctes du support. Ainsi, les réseaux ne sont pas entrelacés. Ce mode de réalisation présente pour avantage de pouvoir associer à chacune des zones de l'hologramme une image correspondant à une longueur d'onde. Le traitement s'en trouve simplifié.

De préférence, les réseaux sont distincts mais jointifs. Alternativement, ils peuvent être distincts et séparés les uns des autres par un espace dans un plan parallèle à un plan xy perpendiculaire à un axe de propagation z principal de l'onde incidente parvenant sur le support.

Selon un exemple, les au moins deux réseaux sont en partie au moins et de préférence entièrement entrelacés.

Ainsi, en projection sur un plan xy, les réseaux sont superposés.

Ce mode de réalisation permet de réduire l'encombrement du dispositif.

Selon un mode de réalisation, les réseaux sont en contact ou sont contenus dans un ou plusieurs plans identiques, parallèles au plan xy. Les réseaux peuvent également ne pas être en contact. Dans ce cas, ils ne présentent pas entre eux un espace apte à laisser passer des particules.

Ce mode de réalisation permet de réaliser chacun des réseaux au cours d'une même étape de fabrication, par exemple au cours d'une même étape de lithographie. Cela permet de supprimer les problèmes d'alignement que l'on aurait si chaque zone devait faire l'objet d'une étape dédiée de lithographie. Ce mode de réalisation permet ainsi de répondre à une problématique consistant à améliorer la précision du détecteur tout en limitant son coût de fabrication.

Selon un autre mode de réalisation, les réseaux sont superposés sans être au contact. Ils sont alors à distance l'un de l'autre, une distance non nulle, prise selon la direction z, les séparant. Tel est par exemple le cas si un réseau est formé par une première face une couche (par exemple si cette face est structurée pour former ce réseau) et qu'un autre réseau est formé par une deuxième face, opposée à la première face de cette même couche ou qu'un autre réseau est formé dans l'épaisseur de cette couche (par exemple si ce réseau est formé par le réseau d'atomes de cette couche).

Ainsi, selon un mode de réalisation, les deux réseaux peuvent recouvrir la même zone. Alternativement, ils peuvent se chevaucher sur une partie seulement des zones qu'ils recouvrent respectivement.

De préférence, chaque onde se propage selon au moins l'axe de propagation z.

Selon un exemple, l'objet présente une dimension critique CD inférieure ou égale à $\lambda$.

Selon un exemple, l'au moins un réseau occupe sur le support une zone présentant, à la longueur d'onde $\lambda$, un coefficient de transmission T tel que T $\geq$ 0,5, de préférence T $\geq$ 0,75 et de préférence T $\geq$ 0,96. Cela permet d'améliorer le contraste de l'image obtenue sur le capteur ainsi que le signal à bruit de fond.

Selon un exemple, les motifs du réseau sont réalisés en un matériau diélectrique.

Alternativement, les motifs du réseau sont réalisés en un matériau présentant un coefficient de conduction de chaleur supérieur ou égal à 5 W.m$^{-1}$.K$^{-1}$, les motifs du réseau étant de préférence réalisés en un matériau métallique tel que le tungstène. Selon un exemple, les motifs du réseau forment des éléments chauffants lorsqu'ils sont alimentés en électricité.

De préférence, les motifs sont réalisés en métal.

Typiquement, les motifs du support peuvent être amenés à une température d'au moins 200°C pour la désorption de matériaux organiques ou volatils. La température peut aller jusqu'à 1700°C voire 2400°C pour des métaux réfractaires tels que le molybdène, ou le tungstène. L'homme de l'art pourra utiliser des alliages comme le disiliciure de molybdène MoSi2 ou le carbure de silicium SiC, notamment en raison d'un coût inférieur.

Ces modes de réalisation permettent de chauffer le support. Cela présente comme avantage de pouvoir détruire par chauffage les particules au contact du support, permettant ainsi de nettoyer ce dernier. Ce mode de réalisation apporte ainsi une solution à la problématique consistant à prolonger la durée de vie et la sensibilité du détecteur.

Ces modes de réalisation permettent également de différencier de nature des particules. En effet, le chauffage du réseau permettra de dégrader certaines particules, typiquement les particules organiques, sans dégrader d'autres particules typiquement des particules métalliques. En réalisant des enregistrements successifs, sans, puis avec chauffage, il est alors possible de discriminer les objets analysés en fonction de leur sensibilité à la chaleur.

Selon un exemple, le réseau comprend, ou est uniquement formé par, au moins un réseau cristallin, les motifs du réseau étant formés, en partie au moins, par des atomes du réseau cristallin.

Selon un exemple, le support comprend une couche présentant une face structurée de sorte à former un premier réseau de motifs en reliefs et un deuxième réseau formé par ledit réseau cristallin.

Selon un exemple, la source émet l'onde incidente selon une direction principale de propagation z, et le support présente une face principale s'étendant dans un plan $P_{30}$ perpendiculaire à l'axe de propagation z.

Selon un exemple, la source émet l'onde incidente selon une direction principale de propagation z, et le capteur présente une pluralité de photodétecteurs s'étendant dans un plan $P_0$ perpendiculaire à l'axe de propagation z.

La source, le support et le capteur d'image sont alignés, de préférence selon une direction de propagation (z) de l'onde incidente. Ainsi, le détecteur est dit « en ligne ».

Selon un mode de réalisation alternatif, le capteur reçoit les ondes diffusées par le support d'une part et reçoit, d'autre part, l'onde de référence, sans que cette dernière passe par le support. On prévoit, par exemple, un dispositif de réflexion ou un interféromètre afin de diviser le rayonnement issu de la source en une onde arrivant sur l'objet et une onde parvenant directement, ou par réflexion, au capteur sans passer par le support. Dans ce cas, on parle d'hologramme en transmission, en configuration « off axis » (c'est-à-dire désaxé).

Les ondes de référence sont des ondes incidentes ayant ou non été diffractées par le réseau de diffraction.

Selon un exemple, l'objet présente une dimension critique CD inférieure ou égale à $\lambda$.

Selon un autre exemple, l'objet présente une dimension critique CD, telle que CD$\geq$2*$\lambda$ et de préférence CD$\geq$10*$\lambda$. Selon un mode de réalisation, CD$\geq$ 10$\mu$m 10$^{-6}$ mètres).

Selon un exemple, le capteur d'image comprend une pluralité de photodétecteurs, typiquement agencée sous forme d'une matrice.

Selon un exemple, l'objet est opaque. Il est disposé sur un fond transparent.

Selon un exemple, l'objet est mobile dans le volume de détection.

Selon un exemple, le support comprend des ouvertures situées entre les motifs. De préférence, les ouvertures séparent les motifs. Selon un mode de réalisation, les ouvertures s'étendent depuis un motif donné et jusqu'à un autre motif, adjacent motif donné.

Selon un exemple, le support forme une grille dont le maillage est formé par les motifs.

Selon un exemple, les motifs sont entièrement supportés par le cadre. Selon un mode de réalisation, le cadre s'étend uniquement sur le pourtour du réseau.

Selon un exemple, le dispositif de détection comprend une pluralité de supports disposés en série, espacés les uns des autres le long de l'axe de propagation z et comprenant chacun au moins un réseau de diffraction, de sorte que l'au moins un objet présent dans le volume de détection soit situé entre les réseaux de deux supports adjacents. Les réseaux canalisent ainsi les objets.

Selon un exemple, la distance entre l'échantillon, plus particulièrement le ou les objets à analyser, et le réseau est inférieure à Z1. Ainsi, on peut avoir Z2≠0 et plus généralement 0<Z2<Z1.

Selon un exemple non limitatif, le dispositif informatique de traitement de données est configuré pour obtenir la reconstruction d'au moins une image à partir d'un hologramme numérique généré par le capteur, en effectuant au moins les étapes suivantes à l'aide d'un dispositif informatique :

> 1/ définition d'une matrice de propagation dans le plan de l'image en fonction de N (nombre de pixels du capteur d'images) ; λ ; la taille de l'objet (typiquement la largeur de la matrice assimilée à l'objet) ; la distance Z1 entre le support (ou l'objet au contact de la matrice) et le capteur d'images.
> 2/ multiplication de l'hologramme numérique par la matrice de propagation,
> 3/ obtention d'au moins une image reconstruite en effectuant une transformation de Fourier inverse sur le résultat de l'étape précédente.

Dans le cadre de la présente invention, le terme « particule » ou ses équivalents a pour définition un constituant d'un système physique considéré comme élémentaire par rapport aux propriétés étudiées.

Le terme « particule » désigne en particulier un objet solide, liquide ou solide mouillé en suspension dans l'air et dont la taille est microscopique. Par exemple, une particule est un élément de matière dont la plus grande dimension est inférieure à quelques millimètres ($10^{-3}$ mètres), de préférence à un millimètre, de préférence inférieure à $100\mu m$, de préférence à quelques dizaines de micromètres ($10^{-6}$ mètres) et de préférence inférieure au micromètre, voire de l'ordre du nanomètre ($10^{-9}$ m). Ces dimensions peuvent correspondre à un diamètre de la particule ou le diamètre d'une sphère dans laquelle la particule est inscrite.

Plus généralement, les particules présentent une taille supérieure à 40 Å ($10^{-10}$ m) et sont donc considérées comme optiquement continues. De manière générale, il s'agit d'objets composés de matière dont les dimensions sont petites par rapport aux dimensions de la cavité ou du canal de circulation des particules.

On entend par « taille » ou « diamètre » d'une particule la distance maximale entre deux points de la particule. Typiquement, on assimile une particule à un objet de taille sphérique, sa taille correspond donc au diamètre de la sphère.

Dans la présente description, un matériau est considéré comme transparent dès lors qu'il laisse passer au moins 50% d'un rayonnement lumineux, de préférence au moins 75% de préférence au moins 90% et avantageusement au moins 95%. Un matériau dit transparent correspond à cette définition au moins pour la longueur d'onde auquel le détecteur intégrant ce matériau est destiné à fonctionner.

Dans la présente description, un matériau est considéré comme opaque dès lors qu'il bloque au moins 50% d'un rayonnement lumineux, de préférence au moins 75% de préférence au moins 90% et avantageusement au moins 95%. Un matériau correspond à cette définition au moins pour la longueur d'onde auquel le détecteur intégrant ce matériau est destiné à fonctionner.

Dans ce qui suit, le terme « diffraction », « diffusion » ou leurs équivalents se réfèrent au phénomène par lequel un milieu de propagation produit une répartition, dans de nombreuses directions, de l'énergie d'une onde électromagnétique, lumineuse par exemple.

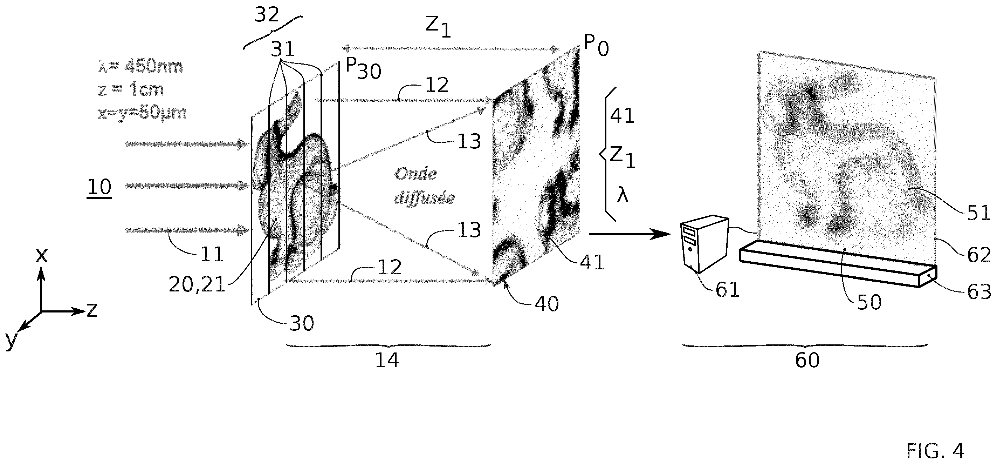

La figure 4 représente un exemple de dispositif selon l'invention. Une source 10 de lumière est configurée pour émettre au moins une onde lumineuse 11, dite onde lumineuse incidente, se propageant en direction d'un échantillon 20. Cette propagation peut s'effectuer directement sur l'échantillon 20, par exemple en se propageant selon un axe principal de propagation, désigné axe de propagation z du repère orthogonal xyz illustré en figure 4. Alternativement, l'onde lumineuse incidente 11 peut parvenir sur l'échantillon 20 après réflexion sur des dispositifs optiques.

L'onde lumineuse 11 est émise selon une bande spectrale Δλ, comportant une longueur d'onde λ. Cette longueur d'onde peut être une longueur d'onde centrale de ladite bande spectrale. Selon un exemple non limitatif, λ appartient aux longueurs d'onde de l'infrarouge ou de l'ultraviolet.

L'échantillon 20 est un échantillon que l'on souhaite caractériser. Il peut notamment s'agir d'un milieu comportant un ou plusieurs objets 21 tels que des particules. Le milieu, dans lequel se trouvent les particules peut-être un fluide gazeux, tel que de l'air. Tel est par exemple le cas si les particules à détecter sont des particules polluantes telles que des particules de fumées etc. Selon un autre mode de réalisation, le milieu peut être un liquide dans lequel baignent les particules. Il peut, par exemple, s'agir d'un liquide corporel, un milieu de culture ou un liquide prélevé dans l'environnement ou dans un procédé industriel. Il peut également s'agir d'un milieu solide ou ayant la consistance d'un gel. Il peut également s'agir d'un échantillon évaporé, fixé ou congelé.

L'échantillon 20 est placé sur ou à proximité d'un support 30. Le support 30 présente au moins une face, en regard de l'échantillon 20 et s'étendant principalement selon un plan XY perpendiculaire à l'axe de propagation z de l'onde incidente 11 à son arrivée sur l'objet 20. Selon un mode de réalisation, l'échantillon 20 est maintenu sur le support 30. Alternativement, il peut être à une distance Z2≠0 de ce dernier notamment lorsque l'échantillon 20 comprend des particules en suspension dans un flux gazeux.

Le support 30 présente au moins une structure périodique de diffraction. Cette structure périodique forme un réseau 32 de motifs 31. De préférence, le support 30 présente un support, également désigné fond, transparent et les motifs 31 du réseau sont opaques. Dans ce cas, les motifs 31 sont de préférence réalisés en un matériau diélectrique ou un matériau métallique tel que le tungstène.

Selon un mode de réalisation alternatif, le support 30 présente un support ou fond opaque et les motifs 31 du réseau sont transparents. Les motifs 31 du réseau 32 sont organisés de manière périodique selon un pas P, tel que $\lambda/2 \leq P \leq 2*\lambda$, de préférence $\lambda/0,75 \leq P \leq 1,5*\lambda$ et de préférence $\lambda/0,9 \leq P \leq 1,1*\lambda$. Le réseau agit comme un filtre spatial. Les caractéristiques, fonctions et avantages du support 30 portant au moins un réseau 32 seront détaillés par la suite.

La distance entre la source de lumière 11 et l'échantillon 10 est de préférence supérieure à 1 cm. Elle est de préférence comprise entre 2 et 30 cm. On peut dire qu'il s'agit d'une onde plane ou sphérique, ce qui permet de s'affranchir de la distance à la source. Pour la reconstruction à partir de l'hologramme numérique, on se limite à ces deux cas pour la description de la source.

De préférence, la source 10 de lumière, vue par l'échantillon 20, est considérée comme ponctuelle. Cela signifie que son diamètre (ou sa diagonale) est préférentiellement inférieur au dixième, mieux au centième de la distance entre l'échantillon 20 et la source 10 de lumière. Ainsi, de préférence, la lumière parvient à l'échantillon 20 sous la forme d'ondes planes, ou pouvant être considérées comme telles. La source 10 de lumière peut être une diode électroluminescente ou une diode laser. Elle peut être associée à un diaphragme, ou filtre spatial. Alternativement, la lumière peut parvenir à l'échantillon 20 sous forme d'ondes sphériques.

De préférence, la bande spectrale d'émission $\Delta\lambda$ de l'onde lumineuse incidente 11 a une largeur inférieure à 100 nm. Par largeur de bande spectrale, on entend une largeur à mi-hauteur de ladite bande spectrale. En général, on considère une onde comme quasi monochromatique si $\Delta\lambda \ll \lambda$ ($\lambda$ étant habituellement désigné $\lambda_0$ dans ce contexte) avec typiquement $\Delta\lambda \sim \pm 5\%$. Généralement, on définit la monochromaticité par rapport à la fréquence de l'onde $f_0$ du signal optique : $\Delta f \ll f_0$.

L'échantillon 20 et le support 30 sont disposés entre la source 10 de lumière et un capteur 40 d'image. Ce dernier s'étend de préférence parallèlement, ou sensiblement parallèlement au plan selon lequel s'étend l'échantillon 20. Le terme sensiblement parallèlement signifie que les deux éléments peuvent ne pas être rigoureusement parallèles, une tolérance angulaire de quelques degrés, inférieure à 20° ou 10° étant admise. Dans l'exemple illustré en figure 4, ces plans correspondent au plan xy du repère xyz.

Le capteur 40 d'image est apte à former une image selon un plan de détection $P_0$. Le plan de détection $P_0$ s'étend de préférence perpendiculairement à l'axe de propagation z de l'onde lumineuse incidente 11, c'est-à-dire qu'il s'étend parallèlement au plan xy. Dans l'exemple représenté, le capteur 40 d'image peut comprendre une matrice de photodétecteurs, chaque photodétecteur comprenant un pixel, de type CCD ou un CMOS. Les CMOS sont les capteurs préférés car la taille des pixels est plus faible, ce qui permet d'acquérir des images dont la résolution spatiale est plus favorable.

La distance Z1 entre le support 30, plus particulièrement entre le réseau 32 du support 30 et la matrice de pixels du capteur 40 d'image est préférentiellement comprise entre 0.01cm ($10^{-2}$ mètres) et 20cm, et de préférence comprise entre 0.1cm et 1cm. Plus précisément, Z1 est mesurée entre une face avant du capteur 40 et la face arrière du réseau 32. La face avant du capteur 40 est tournée en regard de la face arrière du réseau 32

Selon un exemple, les objets 21 à analyser, qu'ils soient statiques ou mobiles dans un fluide, sont situés entre le réseau 32 et le capteur 40 d'image. Le volume de détection destiné, à comprendre les particules, est donc de préférence situé entre le réseau 32 et le capteur 40 d'image, de préférence selon l'axe de propagation z. Ainsi, si le dispositif de détection comprend un canal configuré pour permettre l'écoulement d'un fluide portant les particules, ce canal est donc de préférence situé entre le réseau 32 et le capteur 40 d'image. Alternativement, le dispositif de détection est configuré de sorte à ce que les objets 21 soient situés en amont du réseau 32 par rapport à l'onde incidente. Ainsi, le réseau 32 est situé entre l'objet 21 et le capteur 40 d'image le long de l'axe de propagation z.

De préférence, le dispositif est en outre configuré de sorte que la distance Z2 entre l'échantillon 20, plus particulièrement les objets 21 à analyser et le réseau 32 soit inférieure à Z1.

Ainsi, comme indiqué ci-dessus, il n'est pas nécessaire que les objets 21 soient disposés au contact du réseau 32. Ainsi, on peut avoir Z2≠0 et plus généralement 0<Z2<Z1. Cela permet de relâcher les contraintes sur le positionnement des particules 21. Il est donc possible d'analyser un échantillon dans lequel la position des particules 21 n'est pas parfaitement maîtrisée. Tel est, par exemple, le cas de particules comprises dans un flux gazeux. De préférence, si Z2≠0, c'est-à-dire si l'objet 21 n'est pas au contact du réseau 32, alors on prévoit que l'objet 21 soit à une distance Z2 du réseau 32 de sorte que Z2 ≤ 100 * $\lambda$. Cela permet d'améliorer la qualité de l'hologramme et de l'objet reconstruit numériquement.

On peut également avoir tous ou certains des objets 21 disposés au contact du réseau 32 tel que Z2 = 0. C'est dans ce cas de figure que l'on se positionne dans les différents exemples ci-dessous.

Z1 et Z2 sont mesurées selon l'axe de propagation z.

Les paragraphes ci-dessous décrivent plusieurs modes de réalisation du support 30 comprenant le réseau de diffraction 32.

Selon un premier mode de réalisation, le support 30 comprend, par exemple, une couche transparente sur laquelle repose le réseau 32 de motifs 31. **La couche transparente peut servir de couche de maintien du réseau 32, voire de substrat de manipulation. La couche transparente est, par exemple, formée en silicium. De préférence, cette couche de silicium présent une faible épaisseur pour réduire l'absorption. Son épaisseur est typiquement inférieure ou égale à 100nm. De préférence, cette couche est à base de quartz ou est faite de quartz pour le rayonnement visible.

Les motifs sont, par exemple, formés en métal ou en matériau diélectrique tels que le SixOy ou le SixNy, x et y étant des entiers non nuls.

Pour réaliser le support 30, on peut, par exemple, fournir un empilement comprenant au moins une couche transparente et une couche opaque recouvrant la couche transparente. Les motifs 31 du réseau 32 sont ensuite formés par retrait d'une partie de la couche opaque. On pourra pour cela utiliser l'une des techniques connues de lithographie. On remarquera qu'il est possible de conserver une couche continue du matériau opaque si, entre les motifs 31, ce dernier présente une épaisseur suffisamment fine pour laisser passer une partie suffisante des ondes lumineuses. **Tel** serait, par exemple, le cas avec du silicium. Il est alors possible de recourir aux techniques d'impression nanométriques.

Alternativement, on peut prévoir de rapporter le réseau 32 déjà formé sur le support 30.

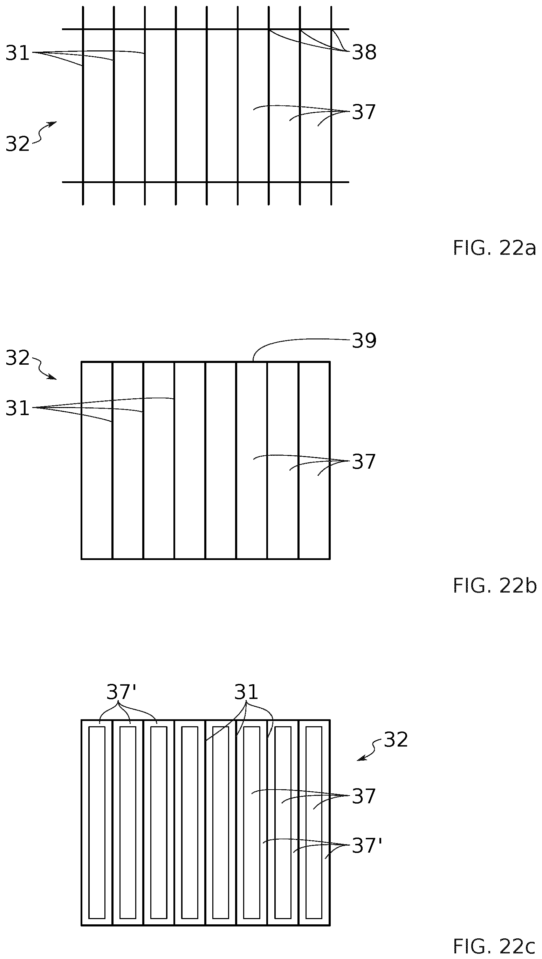

Selon un autre mode de réalisation, les structures périodiques ne reposent pas sur une couche ou sur un élément de support. Elles sont suspendues dans le vide ou l'air, comme illustré en figures 22A à 22C.

Les motifs 31 sont alors séparés les uns des autres sans continuité de matière. Des ouvertures 37 physiques, c'est-à-dire du vide ou de l'air séparent donc les motifs 31. Les motifs 31 sont maintenus entre eux, par exemple par leurs extrémités ou par des points de jonction 38 comme illustré en figure 22A. On peut également prévoir un cadre 39 qui maintient les motifs 31 comme illustré en figure 22B. Le réseau 32 de diffraction comprend ainsi un cadre 39 supportant les motifs 31. Le support 30 présenté est ainsi sous forme d'un grillage. Les motifs 31 forment les mailles du grillage. Selon un mode de réalisation, les motifs 31 sont entièrement supportés par le cadre 39. Selon un mode de réalisation, le cadre 39 s'étend uniquement sur le pourtour du réseau 32.

On peut prévoir entre les motifs 31 uniquement les ouvertures 37 c'est-à-dire une absence de matière comme illustré en figure 22A ou 22B. On peut également prévoir que les motifs 31 soient reliés entre eux par des portions transparentes 37' et que des ouvertures 37 soient également présentes entre les motifs 31. Un exemple de ce mode de réalisation est illustré en figure 22C.

Tous ces modes de réalisation comportant des ouvertures 37 permettent d'augmenter encore la transparence des zones comprises entre les motifs 31 et d'obtenir in fine une image reconstruite encore plus précise. Sur les figures 2A à 2C, des motifs en une dimension sont illustrés. Naturellement, ces modes de réalisation avec ouvertures 37 sont applicables à tout type de motifs.

On remarque l'absence d'optique de grossissement entre le capteur 40 et l'échantillon 20. Cela n'empêche pas la présence éventuelle de microlentilles de focalisation au niveau de chaque pixel du capteur 40, ces dernières n'ayant pas de fonction de grandissement de l'image acquise par le capteur 40. Les microlentilles des capteurs CMOS permettent de collecter davantage de flux optique à concentrer sur la zone active du capteur 40 qui n'occupe qu'une petite partie du pixel image.

Sous l'effet de l'onde lumineuse incidente 11, l'objet 21 de l'échantillon 20 peut engendrer une onde diffractée 13, susceptible de produire, au niveau du plan de détection $P_0$, des interférences, en particulier avec une onde dite onde de référence. Cette onde de référence est une onde incidente ayant ou non été diffractée par le réseau de diffraction. Cette onde de référence est avantageusement une partie de l'onde lumineuse incidente transmise 12 par l'échantillon 20, sans diffraction par l'objet 21 de l'échantillon. Elle peut être transmise à travers le support 30. On notera qu'avec ou sans structure de diffraction, une partie seulement de l'onde incidente est transmise. Par ailleurs, l'échantillon 20 peut absorber une partie de l'onde lumineuse incidente 11. Ainsi, l'onde lumineuse transmise par le support 30, et à laquelle est exposé le capteur 40 d'image 20, peut comprendre :

- une composante non diffractée par l'échantillon 20 et dont une partie au moins est possiblement diffractée par le réseau 32 du support 30. Cette composante correspond à une partie de l'onde lumineuse incidente 12 non absorbée par l'échantillon 20.
- une composante résultant de la diffraction par l'échantillon 20 de l'onde lumineuse incidente 11 et dont une partie au moins est également diffractée par le réseau 32.

Cette onde lumineuse 14 résultante peut aussi être désignée par le terme « onde lumineuse d'exposition ». Cette onde lumineuse d'exposition 14 génère sur le capteur 40 une image 41 également désignée image holographique ou hologramme.

On notera que le dispositif de détection illustré en figure 1 est dit « en ligne », puisque l'objet 20, le support 30 et le capteur 40 sont situés sur l'axe de propagation z de l'onde incidente 11. On notera que l'invention s'applique également aux dispositifs de détection qui ne sont pas en ligne et que l'on qualifie habituellement d'hologramme en transmission, en configuration « off axis » (c'est-à-dire désaxé). Dans ces dispositifs de détection, la composante non diffractée par l'échantillon et la composante diffractée par l'échantillon empruntent des chemins optiques différents, présentant des axes non parallèles. On peut prévoir que l'une de ces deux composantes parvienne sur le capteur 40 d'image après au moins une réflexion sur un réflecteur.

Un équipement informatique 60, comprenant un dispositif de traitement de données 61 tel qu'un processeur, par exemple un microprocesseur, est apte à traiter chaque image acquise par le capteur 40 d'image. En particulier, le processeur est un microprocesseur relié à une mémoire programmable dans laquelle est stockée une séquence d'instructions pour effectuer les opérations de traitement d'images et de calculs de reconstruction de l'image holographique de sorte à obtenir une image 50 reconstruite numériquement. Le processeur peut être couplé à un écran 62 et possiblement à une interface utilisateur 63. L'écran 62 permet l'affichage d'images acquises par le capteur 40 d'image ou calculées par le processeur.

L'image 41 acquise sur le capteur 40 d'image, également appelée hologramme, ne permet pas d'obtenir une représentation suffisamment précise de l'échantillon 20 observé. On peut appliquer, à chaque image 41 acquise par le capteur 40 d'image, un opérateur de propagation, de façon à calculer une grandeur représentative de l'onde lumineuse d'exposition 14 transmise par l'échantillon 20, et à laquelle est exposé le capteur 40. Un tel procédé, désigné classiquement par le terme reconstruction holographique, permet notamment de reconstruire une image du module ou de la phase de cette onde lumineuse d'exposition 14 dans un plan de reconstruction parallèle au plan de détection $P_0$, et notamment dans le plan $P_{30}$ selon lequel s'étend principalement l'échantillon 20.

Pour effectuer une reconstruction holographique à partir de l'image 41 générée par le capteur, on pourra se référer aux publications suivantes "Practical algorithms for simulation and reconstruction of digital inline holograms" (Applied Optics, Vol. 54, Issue 9, pp. 2424-2434 (2015) DOI: 10.1364/AO.54.002424).

De façon très simplifiée, à partir de l'image 41 générée par le capteur 40, de la ou des longueurs d'onde λ, de la distance Z1 et de la nature de l'onde incidente (plane ou sphérique), on effectue les étapes principales suivantes pour reconstruire numériquement l'image de l'objet 21 :

> 1/ Lecture de l'hologramme numérique. Cette matrice est, par exemple, nommée « Holo(x,y ) ». Elle décrit l'hologramme. Cette matrice fait correspondre une intensité lumineuse à chaque point de l'hologramme. Cette matrice est fonction :

> - du nombre de pixels du capteur 40 d'image « NbPix ». Par souci de simplification, on peut prévoir que la matrice du capteur d'image soit carrée et présente un nombre N de pixels par côté (c'est-à-dire par ligne et par colonne). Par souci de simplification également, on prévoit que l'objet soit assimilé à une matrice de mêmes dimensions que celles du capteur d'image. Cette simplification est toutefois parfaitement raisonnable en l'absence de dispositif optique situé entre l'objet et le capteur d'image.
> - de la taille de l'objet « tailleObjet ». Cette taille de l'objet correspond ainsi à la largeur de la matrice assimilée à l'objet.

- De la distance Z entre l'imageur et l'objet. Par souci de simplification, on considère que l'objet est au contact du réseau de diffraction. Ainsi, Z=Z1.

2/ Définition de la matrice de propagation dans le plan de l'image. Cette matrice est fonction de : N (nombre de pixels par coté); λ; tailleObjet ; Z1). . Cette matrice est, par exemple, nommée « Prop(N ; lambda ; tailleObjet ; Z) ».
On pourra définir Z comme variable d'itération pour optimiser la position idéale de reconstruction de l'image. En effet, la distance entre la particule et le plan du capteur numérique d'enregistrement de l'hologramme peut varier et ne pas être parfaitement connue. On pourra alors la retrouver par le calcul de reconstruction, en ajustant la valeur de Z.
3/ multiplication de l'hologramme par la matrice de propagation, soit : HoloZ(x,y)=Holo(x,y)* prop(N ; lambda ; tailleObjet ; Z)
4/ On effectue ensuite la transformation inverse du résultat obtenu à l'étape précédente : Rec=FFTinverse 2D(HoloZ).

De manière plus générale, on pourra se référer au document WO 2017/178723 pour caractériser de manière précise un objet ou une particule à partir d'une image 41 réalisée par le capteur 40.

Selon un mode de réalisation optionnel, on peut prendre en compte la présence du réseau 32, en appliquant un traitement d'images, par exemple en appliquant un filtre spectral. Cela peut améliorer encore la qualité de la reconstruction de l'objet.

Comme indiqué dans ce document, afin de reconstruire une image du module ou de la phase de l'onde lumineuse d'exposition 14 dans un plan de reconstruction parallèle au plan de détection $P_0$ du capteur 40 d'image, on effectue un produit de convolution de l'image 41 acquise par le capteur 40 d'image par un opérateur de propagation h. Il est alors possible de reconstruire une expression complexe A de l'onde lumineuse d'exposition 14 en tout point de coordonnées (x, y, z) de l'espace, et en particulier dans un plan de reconstruction $P_z$ situé à une distance | z | du capteur 40 d'image, ce plan de reconstruction pouvant être le plan de l'échantillon $P_{30}$, dans le cas ou | z | = Z1. L'expression complexe A est une grandeur complexe dont l'argument et le module sont respectivement représentatifs de la phase et de l'intensité de l'onde lumineuse 14 à laquelle est exposé le capteur 40 d'image. Le produit de convolution de l'image 41 par l'opérateur de propagation h permet d'obtenir une image complexe $A_z$ représentant une distribution spatiale de l'expression complexe A dans un plan, dit plan de reconstruction $P_z$, s'étendant à une coordonnée z du plan de détection $P_0$. Dans cet exemple, le plan de détection $P_0$ a pour équation z = 0. Cette image complexe correspond à une image complexe de l'échantillon dans le plan de reconstruction P$_z$. Elle représente également une distribution spatiale bidimensionnelle des propriétés optiques de l'onde 14 à laquelle est exposé le capteur 40 d'image.

L'opérateur de propagation h a pour fonction de décrire la propagation de la lumière entre le capteur 40 d'image et un point de coordonnées (x, y, z), situé à une distance | z | de ce dernier. Il est alors possible de déterminer le module M(x, y, z) et/ou la phase φ (x,y,z) de l'onde lumineuse 14, à cette distance | z | , dite distance de reconstruction, avec :

$$M(x, y, z) = abs\ [A(x, y, z)]$$

$$φ\ (x, y, z) = arg\ [A(x, y, z)]$$

Les opérateurs « abs » et « arg » désignent respectivement le module et l'argument. Autrement dit, l'expression complexe A de l'onde lumineuse 14 en tout point de coordonnées (x, y, z) de l'espace est telle que :

$$A(x, y, z) = M(x, y, z)e^{jφ(x,y,z)}$$

L'obtention d'une image complexe Az de l'échantillon par application d'un opérateur de propagation à un hologramme est connue de l'art antérieur, en particulier à des fins de caractérisation de particules, comme en témoignent les références indiquées ci-dessus et dans la section relative à l'état de la technique.

En prévoyant sur le support 30 un réseau 32 agissant comme un filtre spatial, le dispositif selon l'invention permet d'améliorer considérablement la résolution de la reconstruction de l'objet à partir de l'image 41.

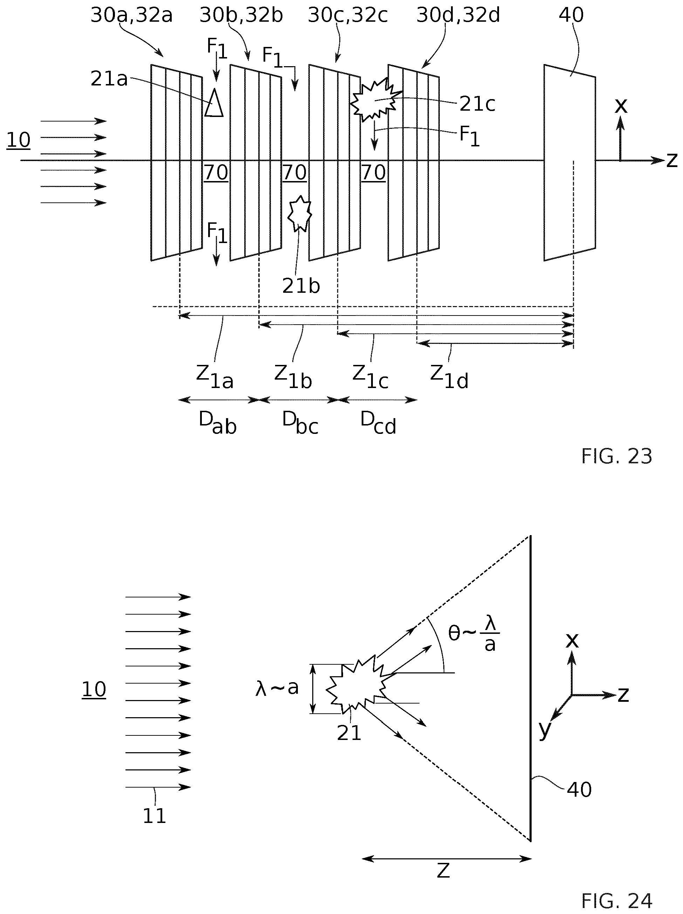

Comme illustré en figure 24, avec un dispositif de détection selon l'art antérieur (figure 1) l'enregistrement d'un hologramme en ligne d'une particule 21 diffusant la lumière est limité par l'interaction entre l'onde incidente 11 et la particule 21 qui diffuse la lumière d'une part et d'autre part, par la distance du capteur 40 d'image et sa surface (dans le plan xy) qui enregistre l'hologramme. Plus le capteur 40 d'image collectera de lumière provenant de la particule 21, plus la reconstruction pourra être fidèle à la particule 21 à analyser. Cela est le cas pour un capteur 40 d'image de grande dimension dont la distance Z à la particule 21 à analyser est petite, ceci afin d'avoir la plus grande ouverture numérique possible.

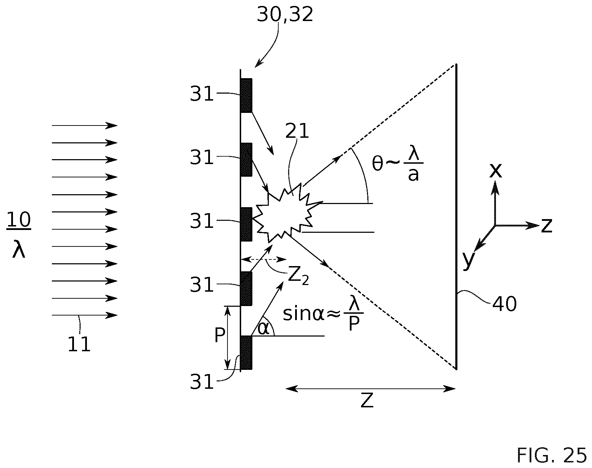

Comme illustré en figure 25, avec un dispositif de détection selon l'invention, l'apport d'un réseau 32 de diffraction dont la période est proche de la longueur d'onde λ incidente 11, permet d'augmenter l'interaction entre la lumière et la particule 21. Pour une même configuration d'enregistrement (distance Z et largeur du capteur 40 d'image) le capteur 40 d'image collectera plus de lumière diffusée par la particule 21. En effet, si la particule 21 est disposée entre le réseau 32 et le capteur 40 d'image, la lumière diffractée par le réseau 32 qui sera ensuite aussi interceptée par la particule 21 s'ajoutera à la lumière incidente diffusée par la particule 21 et transmise par le réseau 32. L'effet est le même si le réseau 32 de diffraction est situé entre la particule 21 et le capteur 40 d'image.

Dans le cas optimum, la particule 21 est au contact du réseau 32 (Z2=0), le réseau à une période P=λ. Par ailleurs, la diffraction se fait à 90° de l'onde incidente (transversalement) ce qui permet à la particule 21 de collecter et d'interagir avec une onde transverse.

Pour des réseaux de période P < λ, les angles de diffraction seront plus petits donc moins efficaces lorsque la particule 21 sera au contact du réseau. Mais, dans ce cas, la particule 21 pourra être décalée du réseau à une distance Z2≠0 dont l'optimum sera fonction de P, λ, la taille de la particule 21 et Z.

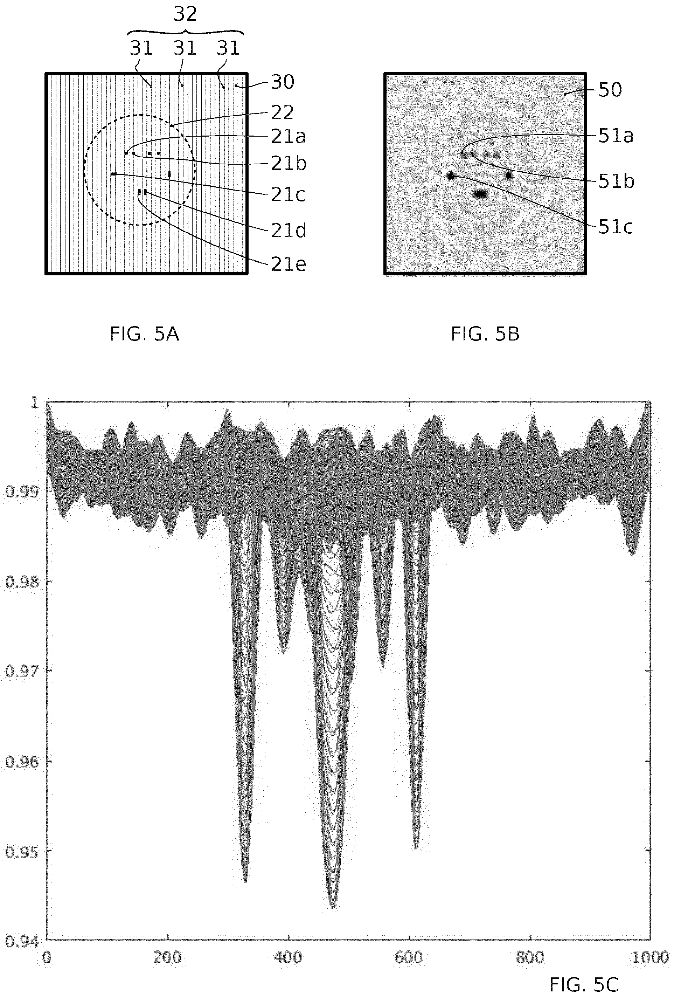

Les figures 5A et 5C correspondent au même cas que celui illustré sur les figures 3A à 3C. L'échantillon 20 comprend une scène 22 présentant les mêmes particules 21a-21e que sur les figures 3A à 3C. La longueur d'onde de la source est identique (450 nm) et le détecteur est identique hormis le fait que le support 30 présente un réseau 32. Ici, ce réseau 32 est formé de lignes parallèles entre elles et réparties de manière périodique selon un pas P = λ = 450 nm. Les figures 5B et 5C montrent les résultats de la reconstruction numérique de l'image 41 générée par le capteur 40. Ces résultats sont indiscutablement meilleurs que ceux de la figure 3C. En particulier, il est possible d'identifier les particules et même de distinguer les particules 21a et 21b comme illustré par les tâches 51a et 51b de la figure 5B. On notera qu'un résultat encore nettement amélioré peut être obtenu en choisissant un réseau dont les motifs seraient mieux adaptés à cette scène 22. L'identification d'un réseau 32 optimal peut être obtenue en essayant divers réseaux puis en comparant les résolutions obtenues avec chaque réseau.

Les paragraphes ci-dessous décrivent les effets de la période des motifs du réseau sur le contraste et la résolution de l'hologramme reconstruit.

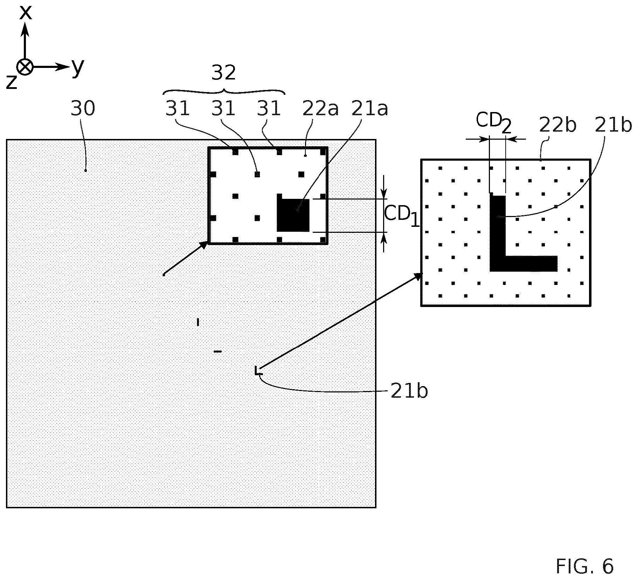

La figure 6 illustre un support 30 présentant un réseau 32 formé de motifs 31 ponctuels. On peut ainsi qualifier ce réseau 32 de réseau en deux dimensions. En effet, les motifs 31 présentent un premier alignement selon la direction x et présentent un deuxième alignement selon la direction y. Le pas P du réseau est identique selon ces deux directions.

L'échantillon 20 observé présente notamment les objets 21a et 21b qui apparaissent de manière agrandie dans les scènes 22a et 22b.

Dans cet exemple, la longueur d'onde λ est égale à 450 nm. Les dimensions critiques CD1, CD2 illustrées en figure 6, sont respectivement de l'ordre de 225 et 337 nm.

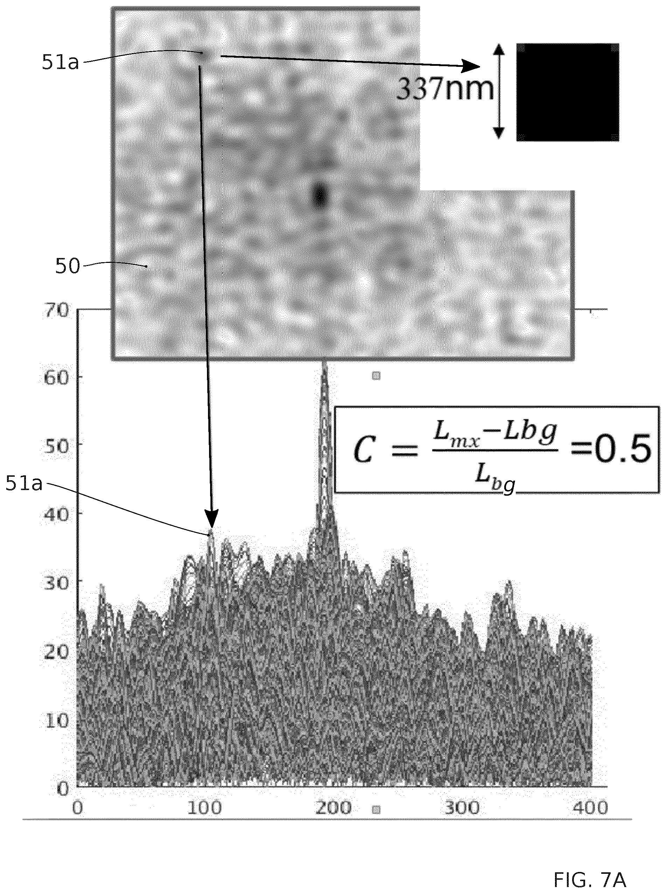

Les figures 7A à 7D illustrent les résultats de la reconstruction de l'image 41 holographique générée par le capteur en fonction du support 30 utilisé.

La figure 7A correspond au cas où le support 30 ne présente pas de réseau 32. Le support forme ainsi une plaque transparente. Ce mode de réalisation correspond ainsi aux solutions de l'état de la technique. Il ressort clairement qu'il est très difficile d'identifier les particules et en particulier la particule 21a. En effet, sur l'image reconstruite numériquement 50 l'objet 51a apparaît très peu distinctement. Le contraste C est égal à 0,5. Dans l'équation C apparaissant sur les figures 7A à 7D, $L_{mx}$ et $L_{bg}$ correspondent respectivement à l'intensité lumineuse reçue maximale et l'intensité lumineuse moyenne. Le calcul du contraste C peut s'effectuer sur l'équation suivante $C = (L_{mx}-L_{bg})/L_{bg}$. Dans ce mode de réalisation, l'image 50 est un carré de $25,58\mu m$ de côté.

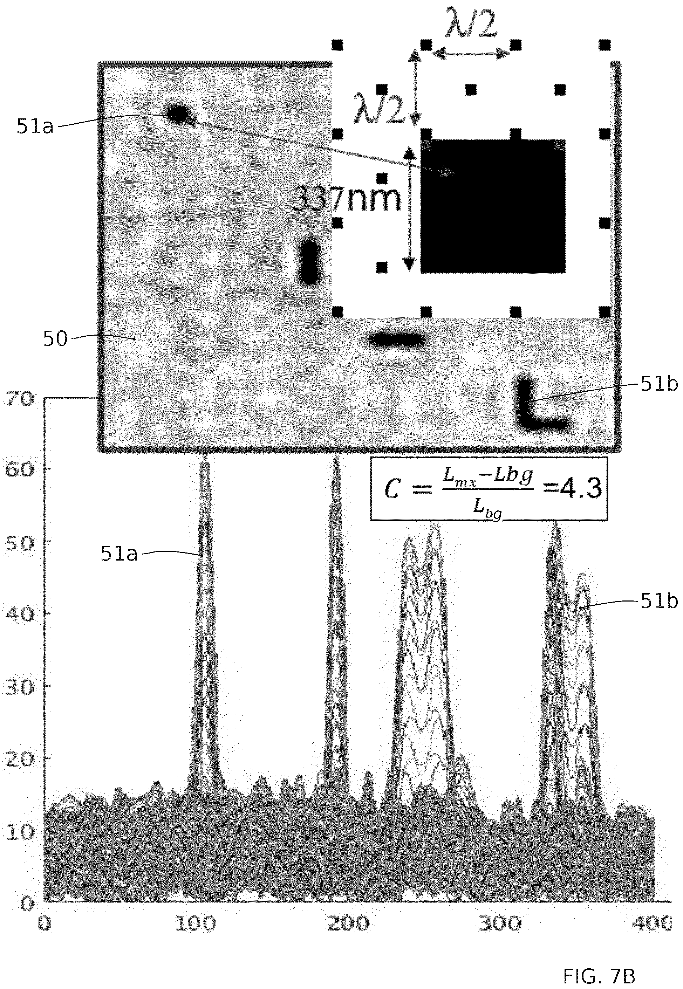

La figure 7B correspond au cas où le support 30 présente un réseau 32 dont le pas $P = \lambda/2$. On s'aperçoit qu'il est possible d'identifier toutes les différentes particules. En particulier, sur l'image 50 obtenue par reconstruction de l'hologramme les images 51a, 51b des particules 21a, 21b sont très facilement identifiables. Le contraste C est égal à 4,3.

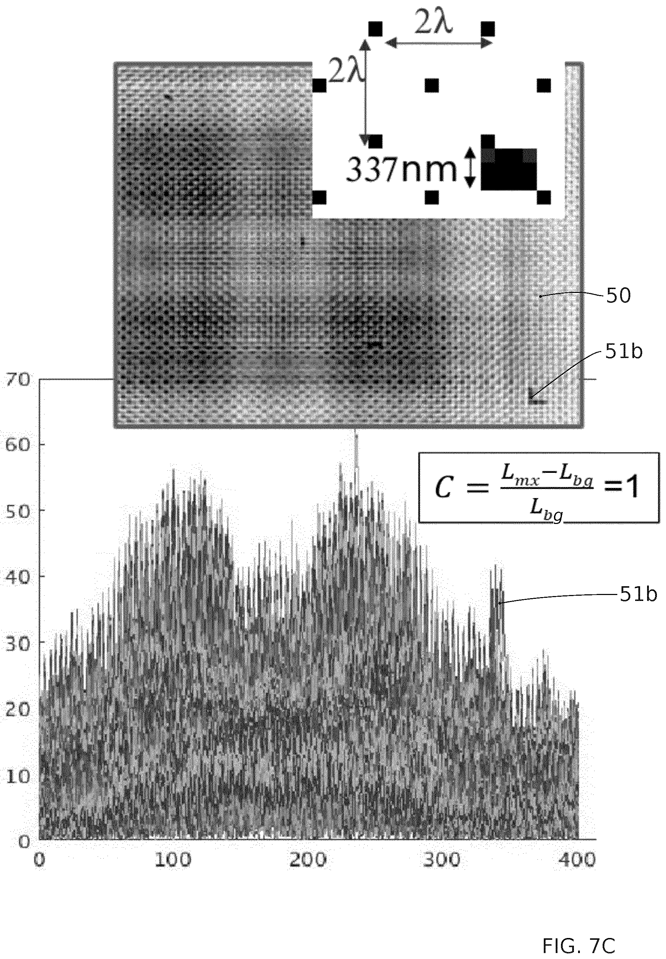

La figure 7C correspond au cas où le support 30 présente un réseau 32 dont le pas $P = 2\lambda$. On s'aperçoit qu'avec ce réseau également il est possible d'identifier les différentes particules. Le contraste C est égal à 1.

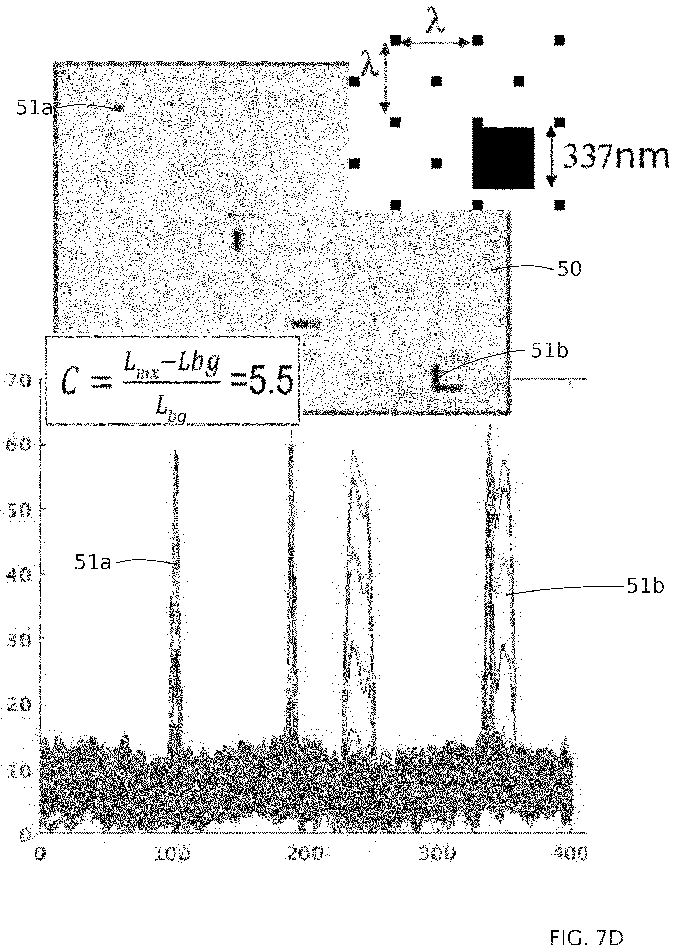

La figure 7D correspond au cas où le support 30 présente un réseau 32 dont le pas $P = \lambda$. La résolution est encore nettement supérieure à celle de la figure 7B ou de la figure 7C. Le contraste C est égal à 5,5, ce qui est très supérieur à celui des modes de réalisation avec $P = \lambda/2$ ou $P = 2\lambda$.

Dans ces modes de réalisation des figures 7A à 7D, la taille des images 41 sont des carrés dont les longueurs des côtés sont respectivement de 25,58 $\mu m$, 53,15 $\mu m$ et 106,3 $\mu m$. Dans les exemples décrits, on a utilisé pour les calculs, les mêmes dimensions et le même nombre de pixels pour décrire l'objet et l'hologramme. Au niveau du capteur 40, la densité de pixels par ligne est de 925 pixels. La taille ou le pas de chaque pixel de la matrice de pixels du capteur 40, sont, respectivement pour les modes de réalisation des figures 7B à 7D de : 28 nm ($P = \lambda/2$), 112,5 nm ($P = 2\lambda$) et 56 nm ($P = \lambda$).

Il ressort de ces figures, qu'un pas P égal ou proche de $\lambda$ est très nettement avantageux. Un pas P supérieur à $2\lambda$ ne permet plus d'obtenir une résolution réellement satisfaisante.

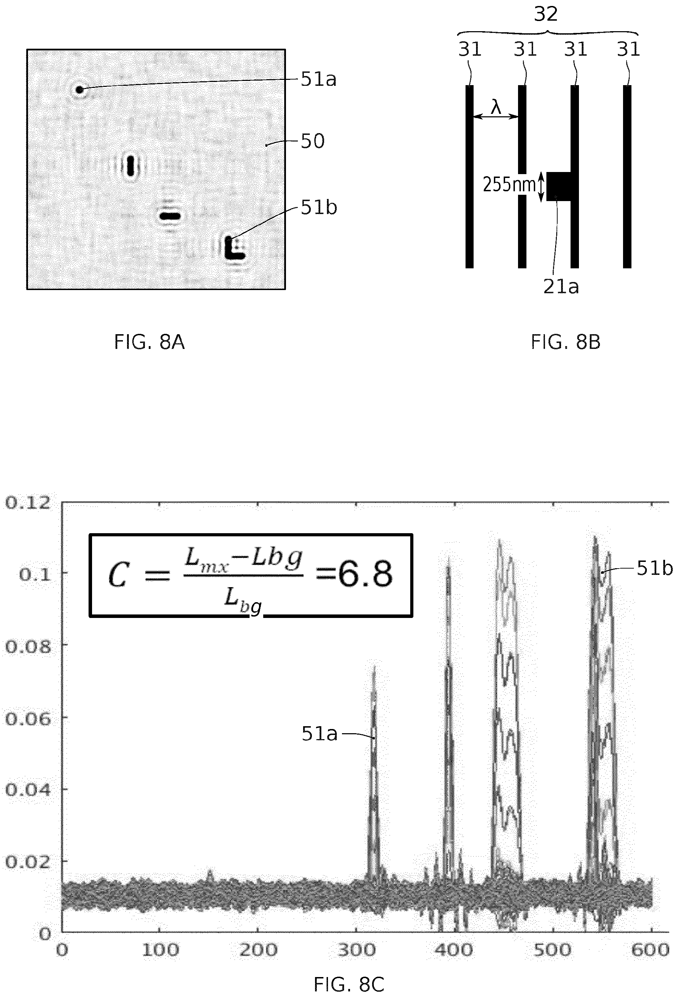

Les figures 8A à 8C illustrent le résultat obtenu avec le même échantillon que celui observé sur les figures 7A à 7D mais avec un réseau 32 unidimensionnel (1D). Le réseau 32 est formé de motifs 31 définis par des lignes parallèles. Chaque ligne est, par exemple, formée par un trait opaque. La période du réseau est égale à $\lambda$. Dans ce mode de réalisation, la largeur d'un trait, prise dans une direction perpendiculaire à la direction principale d'extension du trait, est d'environ $\lambda/4$. Les figures 8A et 8C montrent que la résolution obtenue est très bonne. Les images 51a, 51b des particules 21a, 21b notamment, sont très facilement identifiables. Le contraste C est égal à 6,8. Ce contraste est meilleur que celui obtenu dans le mode de réalisation du réseau 32 en 2D présentant un pas $P = \lambda$, du fait que les motifs sont plus fins et donc que le support 30 bloque moins de lumière, améliorant de ce fait le contraste.

Il ressort de ces exemples que tout type de motif 31 périodique (1D ou 2D) peut être utilisé pour améliorer la reconstruction de l'objet à partir de l'enregistrement de l'hologramme 41. Un réseau 32 périodique de période proche de la longueur d'onde d'éclairement $\lambda$ de l'objet 20 sera optimal pour la reconstruction digitale de l'objet à partir de l'image 51 enregistrée de l'hologramme.

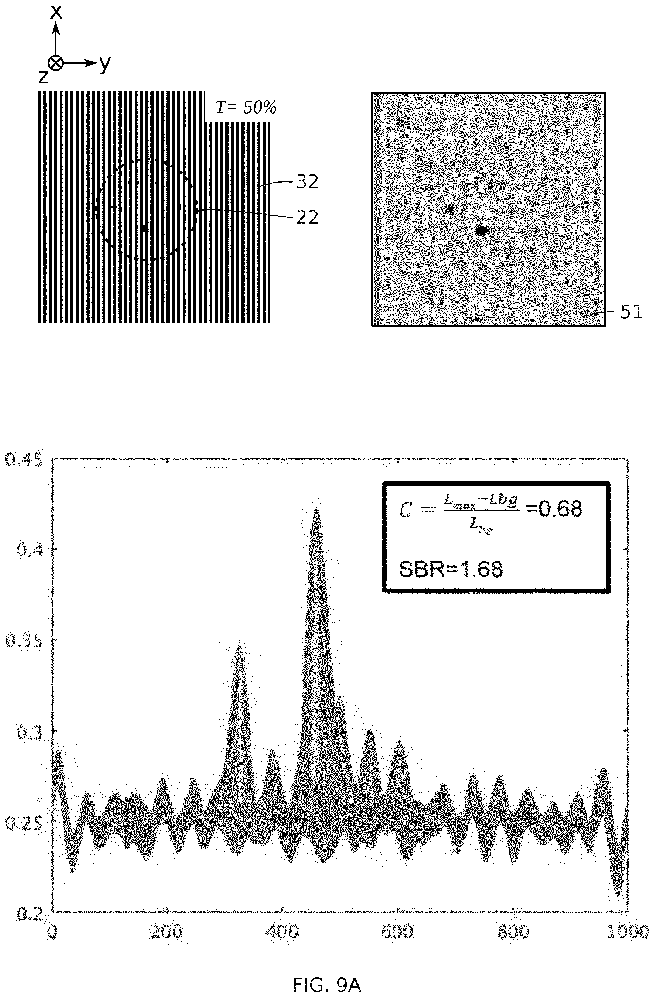

Les figures 9A à 9C illustrent l'influence du taux de remplissage du réseau 32 de diffraction sur la résolution obtenue.

Pour chacun de ces modes de réalisation, l'échantillon 20 observé comprend la même scène 22 que celle des figures 3A ou 5A. Pour chacun de ces modes de réalisation, le réseau 32 est un réseau 1D, formé de traits opaques, s'étendant dans cet exemple non limitatif selon l'axe x. Le pas P de chaque réseau est identique. Seule varie l'épaisseur de chaque motif, c'est-à-dire la largeur de chaque trait, prise selon la direction y. Cette variation d'épaisseur impacte ainsi directement le taux de remplissage de la structure 30. On désigne par taux de remplissage, le pourcentage de la surface occupée par les motifs opaques sur la surface totale du support 30. Inversement, on désigne par taux de transmission le pourcentage de la surface non occupée par les motifs opaques sur la surface totale du support 30. Si les motifs opaques occupent toute la surface du support 30, alors le taux de transmission est nul. Inversement, si le support 30 ne comporte pas de motifs opaques, alors le taux de transmission est égal à 100%.

Dans l'exemple illustré en figure 9A, l'épaisseur de chaque trait est telle que le taux de transmission $T = 50\%$. Le contraste $C = 0,68$. Le rapport signal sur bruit $SBR = 1,68$.

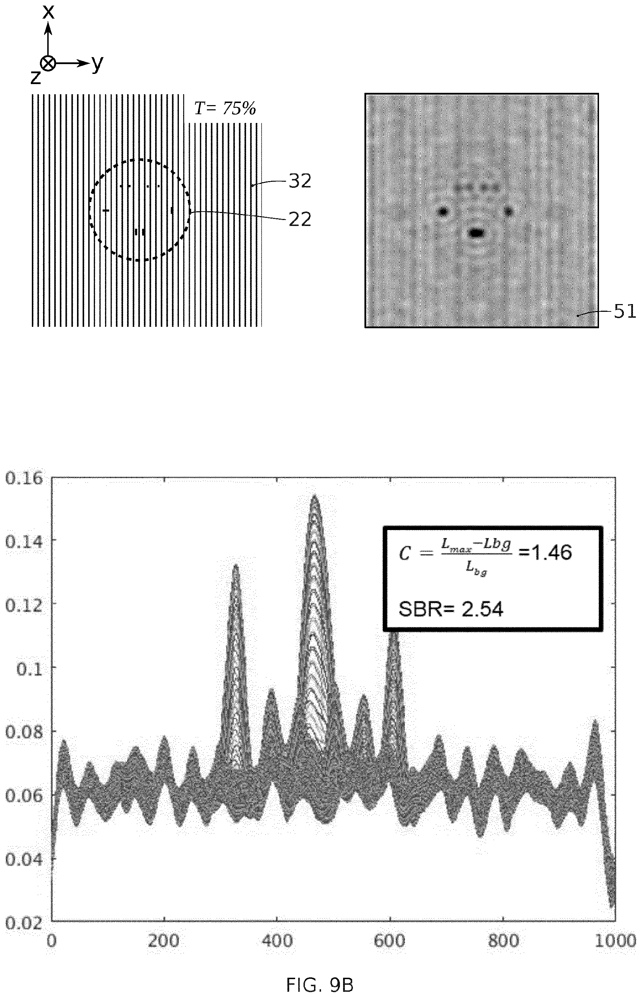

Dans l'exemple illustré en figure 9B, l'épaisseur de chaque trait est telle que le taux de transmission $T = 75\%$. Le contraste $C = 1,46$. Le rapport signal sur bruit $SBR = 2,54$.

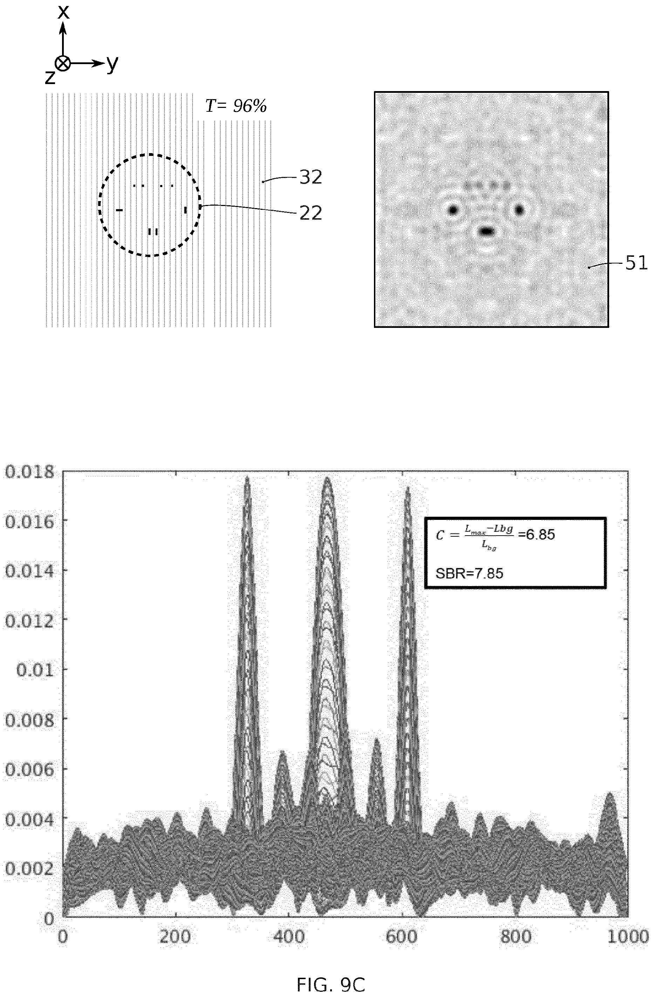

Dans l'exemple illustré en figure 9C, l'épaisseur de chaque trait est telle que le taux de transmission $T = 96\%$. Le contraste $C = 6,85$. Le rapport signal sur bruit $SBR = 7,85$.

Il ressort de ces figures que le contraste et le rapport signal sur bruit sont d'autant meilleurs que la structure périodique 32 est transparente.

Dans les exemples qui suivent, la structure périodique de diffraction du support 30 comporte plusieurs réseaux 32. Le pas P de chaque réseau 32 est adapté pour une longueur d'onde donnée. Ainsi, en illuminant l'échantillon 20 avec des ondes dont les longueurs sont différentes, on obtient autant d'images 41 que de longueurs d'onde d'exposition. Les ondes incidentes d'exposition présentent des longueurs d'ondes différentes peuvent être émises simultanément ou successivement sur l'échantillon 20.

Par exemple, on peut prévoir qu'un réseau présente un pas adapté aux longueurs d'onde de l'infrarouge et qu'un autre réseau présente un pas adapté aux longueurs d'ondes de l'ultraviolet. Cela permet alors une analyse chimique selon l'absorption moléculaire des composants constitutifs des particules 21 de l'échantillon 20. L'image de l'objet reconstruit numériquement aura une variation d'intensité dépendant de l'absorption de lumière propre à la composition chimique de la particule 21 analysée. On peut également prévoir un nombre plus important de réseaux 32. On peut, par exemple, prévoir sur le même support 30 au moins trois réseaux, dont par exemple :

- un réseau 32a adapté aux longueurs d'onde de la couleur bleue, le pas Pa de ce réseau sera, par exemple, de 450 nm,
- un réseau 32b adapté aux longueurs d'onde de la couleur verte, le pas Pb de ce réseau sera, par exemple, de 600 nm,
- un réseau 32c adapté aux longueurs d'onde de la couleur rouge, le pas Pc de ce réseau sera, par exemple, de 750 nm.

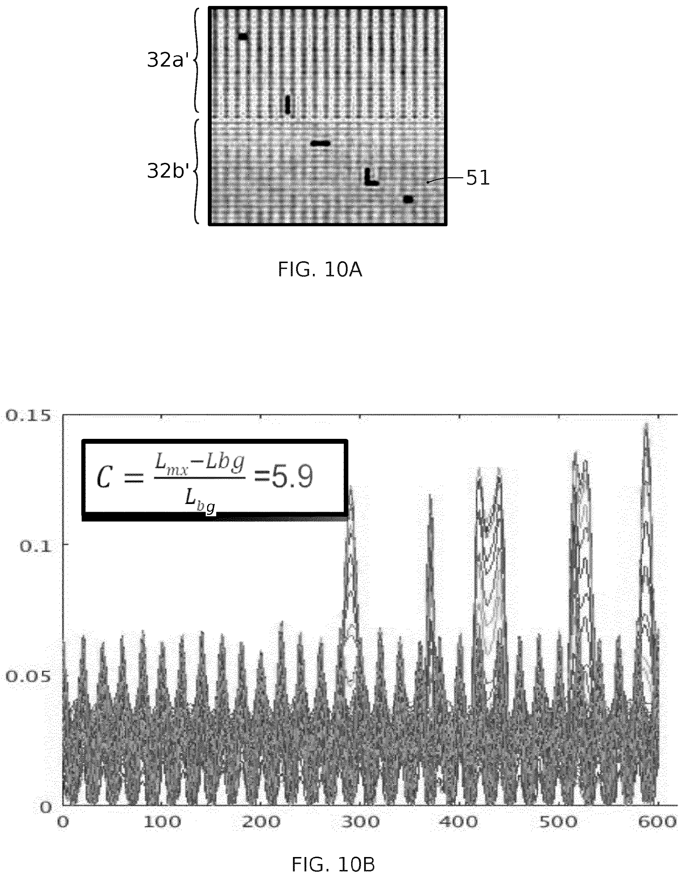

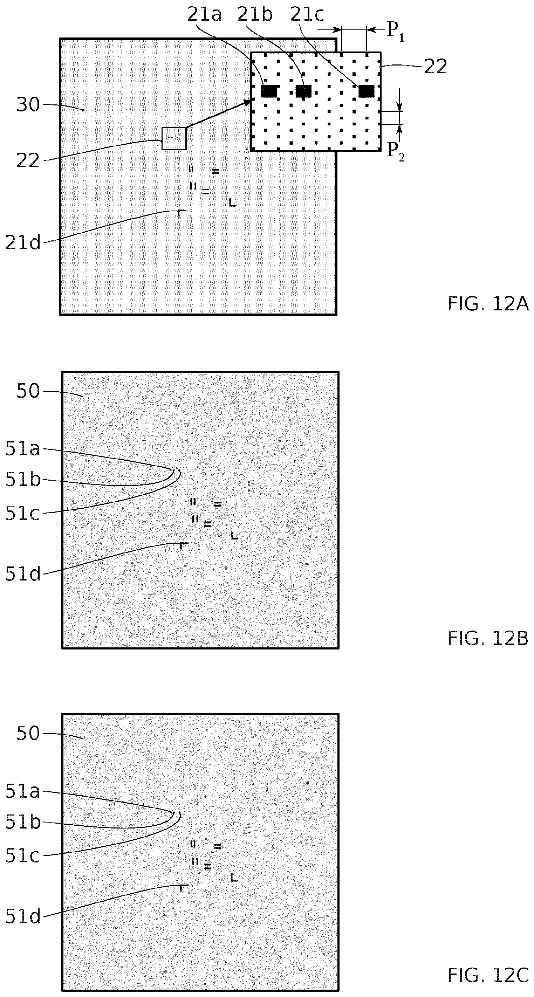

Selon un premier mode de réalisation, le support 30 comprend plusieurs réseaux distincts les uns des autres. Ces réseaux ne se recouvrent pas. Ils occupent des zones distinctes du support 20. Ce mode de réalisation va être détaillé en référence aux figures 10A à 11C. Un autre mode de réalisation dans lequel les différents réseaux se recouvrent partiellement ou entièrement sera détaillé en référence aux figures 12A à 12C.

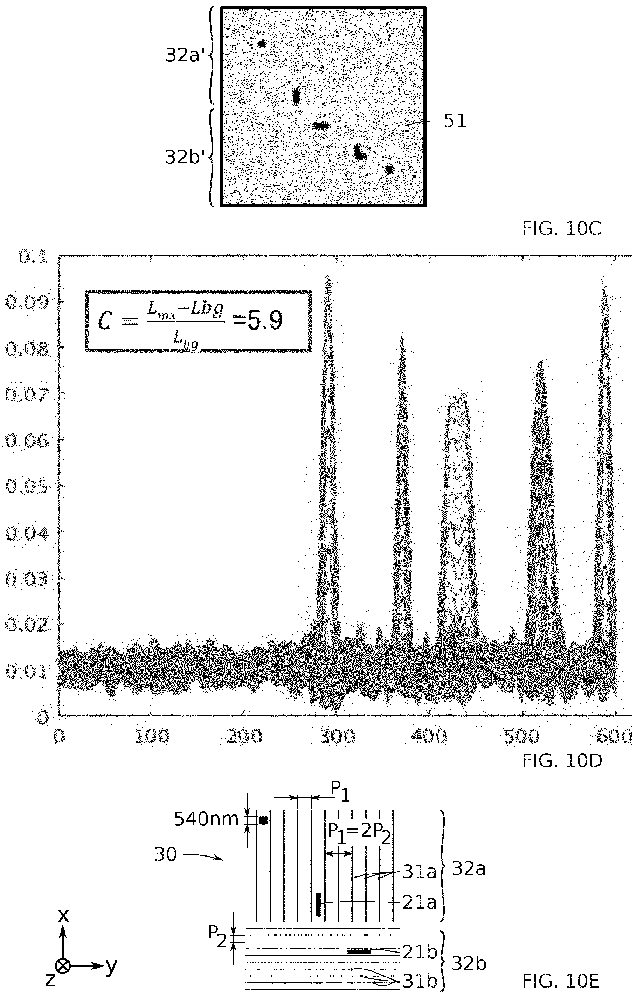

Un premier exemple de support comprenant des réseaux séparés est illustré en référence aux figures 10A à 10D. Le support 30 comprend un premier réseau 32a et un deuxième réseau 32b, comme cela apparaît en figure 10E.

Le premier réseau 32a comporte des motifs 31a formant des lignes parallèles, s'étendant verticalement (x) et réparties de manière périodique selon un pas P1. Le deuxième réseau 32b comporte des motifs 31b formant des lignes parallèles, s'étendant horizontalement (y) et réparties de manière périodique selon un pas P2≠P1. Dans cet exemple, Pb = 2Pa. Les longueurs d'onde d'exposition de l'échantillon 20 sont respectivement λa = 450nm et λb= 900nm. Z1 = 1cm. L'échantillon 20 comporte notamment la particule 21a située sur ou en regard du réseau 32a et la particule 21b située sur ou en regard du réseau 32b. Ces particules 21a, 21b, sont ici des rectangles dont les dimensions, en projection sur un plan parallèle au plan xy, sont égales à 1,53$\mu$m * 0.27$\mu$m.

En exposant l'échantillon 20 simultanément ou successivement avec des ondes incidentes de longueurs d'onde λa et λb, on obtient deux images ou hologrammes 41. Les figures 10A et 10B illustrent l'objet reconstruit 50 par exposition à longueur d'onde λa. Le contraste obtenu est de 5,9. Les figures 10C et 10D illustrent l'objet reconstruit 50 par exposition à longueur d'onde λb. Le contraste obtenu est de 5,9. On retrouve sur les images 50 reconstruites numériquement, et illustrées sur les figures 10A et 10C, des zones 32a' et 32b' qui correspondent aux 2 réseaux 32a, 32b du support 30.

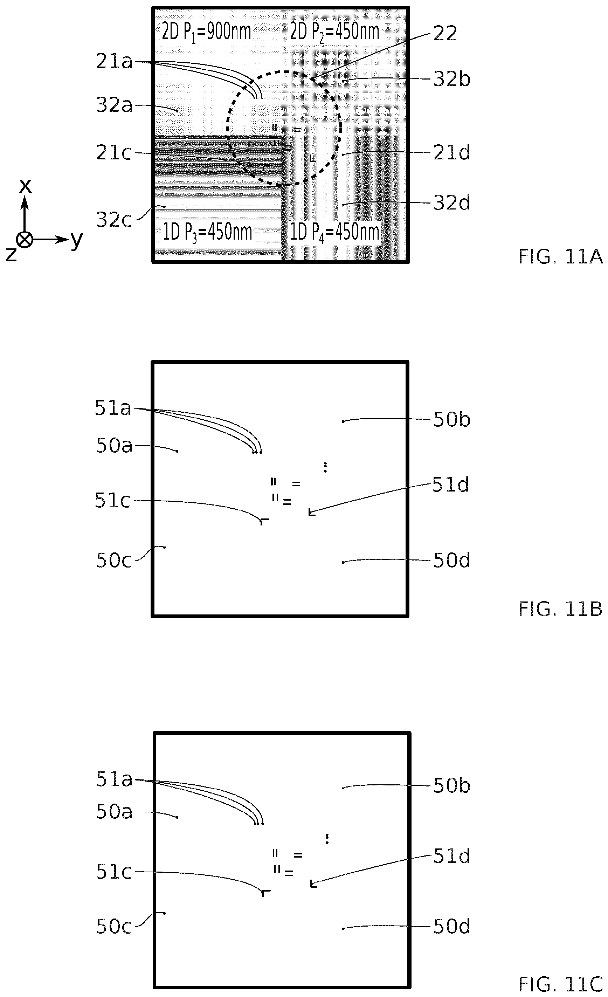

Un deuxième exemple de support 30 comprenant des réseaux séparés est illustré en figures 11A à 11C. Le support 30 comprend quatre réseaux 32a, 32b, 32c, 32d. Ici, chaque réseau occupe un quart de la surface du support 30.

La scène 22 analysée comporte les particules 21a-21d qui se répartissent en regard des réseaux du support 30.

Dans cet exemple non limitatif, le support 30 comporte deux réseaux 2D et deux réseaux 1D. Plus précisément, dans cet exemple :

- le réseau 32a est un réseau 2D, sous forme de matrice, dont le pas Pa = λa = 900nm,
- le réseau 32b est un réseau 2D sous forme de matrice, dont le pas Pb = λb= 450nm,
- le réseau 32c est un réseau 1D, formé de traits horizontaux (axe y) répartis périodiquement selon un pas Pc = λc = 450nm,
- le réseau 32d est un réseau 1D, formé de traits verticaux (axe x) répartis périodiquement selon un pas Pd = λd = 450nm.

Dans cet exemple, comme dans les exemples précédents, les dimensions critiques de l'échantillon 20 sont comprises entre 280 et 336 nanomètres. La distance Z1 entre le support 32 et le capteur 40 d'images est égale à 1 cm.

La figure 11B correspond à l'image 50 l'objet reconstruit numériquement lorsque la source 10 émet une onde incidente de longueurs d'onde λ = λb= λc = λd = 450nm. La figure 11C correspond à l'objet reconstruit numériquement lorsque la source 10 émet une onde incidente de longueurs d'onde λ = λa= 900nm.

Comme indiqué ci-dessus les réseaux peuvent, selon un autre mode de réalisation, se recouvrir entièrement ou partiellement. Un tel exemple va maintenant être décrit en référence aux figures 12A à 12D.

Dans cet exemple, deux réseaux sont entièrement entrelacés. Ils occupent la même zone du support 30. Dans cet exemple, il s'agit de deux réseaux de motifs ponctuels. Ces deux réseaux sont entrelacés. Un premier réseau présent un pas Pa = λa = 450nm et un deuxième réseau présente un pas Pb = λb= 900nm. Dans cet exemple, Z1 = 1cm.

La figure 12B correspond à l'objet reconstruit numériquement lorsque la source 10 émet une onde incidente de longueurs d'onde λ = λa = 450nm. La figure 12C correspond à l'objet reconstruit numériquement lorsque la source 10 émet une onde incidente de longueur d'onde λ = λb= 900nm. Les images 51a-51d des particules 21a-21d sont très facilement identifiables.

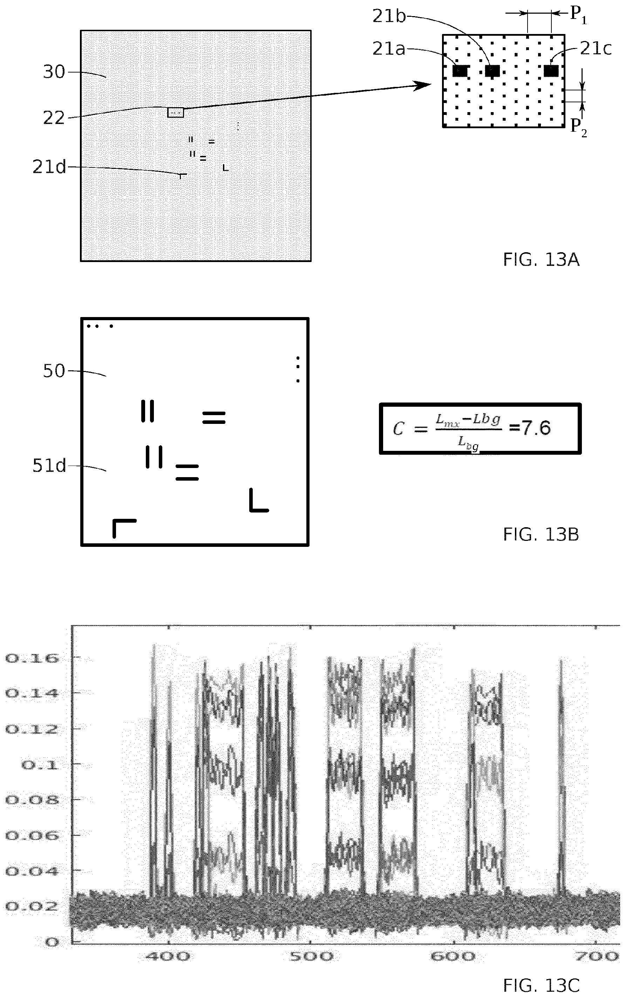

Les figures 13A à 15C illustrent l'influence de la taille de la matrice de pixels du capteur 40 collectant l'onde d'exposition 14 se propageant depuis le capteur 40. En effet plus la taille de la matrice de pixels (et donc du capteur) est grande, plus elle capte de lumière et d'information sur l'objet..

Dans ces exemples, Z1 = 1cm et λ = 450nm. Le support 30 est identique à celui des figures 12A à 12C. Ainsi, le support 30 comporte deux réseaux 32 entrelacés, formés de motifs ponctuels. Typiquement, les pas de chacun des réseaux est de 450 et 900nm.

L'échantillon 20 est identique pour chacune de ces figures. Les figures 13A, 14A et 15A illustrent les images 41 générées par le capteur 40, c'est-à-dire les hologrammes.

Dans chacun de ces exemples, le capteur 40 est une matrice de pixels, carrée, dont la longueur d'un côté est L et comportant un nombre de pixels par ligne égal à Nbpix.

Dans le premier exemple, illustré en figure 13A, L = 112,52μm et Nbpix = 1000. L'image 51 reconstruite numériquement est illustrée en figure 13B. Le contraste obtenu est égal à 7,6. L'intensité lumineuse en fonction de la position des pixels est illustrée en figure 13C.

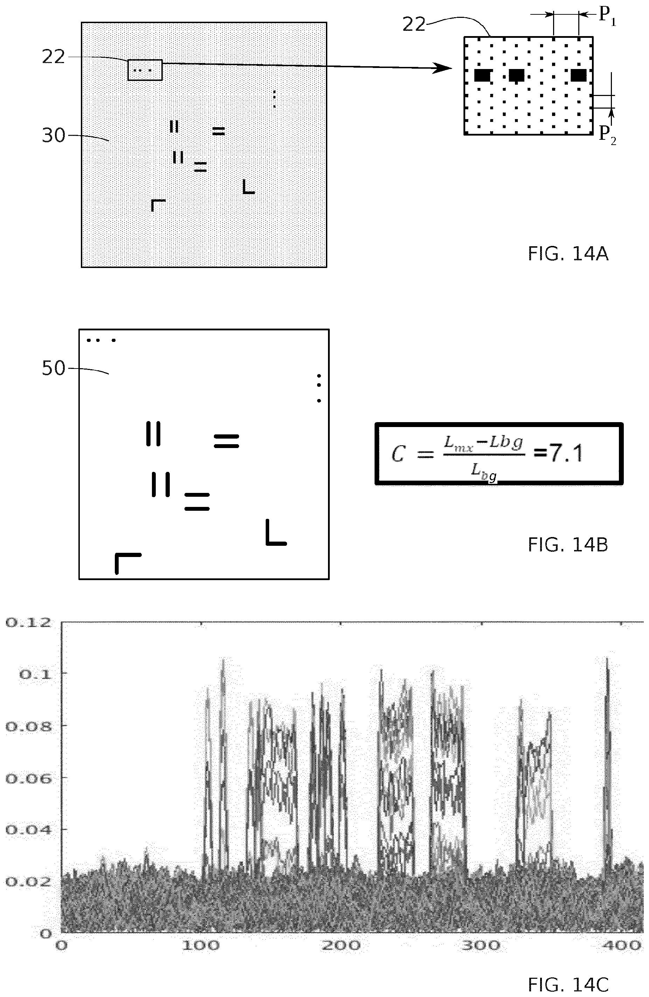

Dans le deuxième exemple, illustré en figure 14A, L = 56,26μm et Nbpix = 500. L'image 51 reconstruite numériquement est illustrée en figure 14B. Le contraste obtenu est égal à 7,1. L'intensité lumineuse en fonction de la position des pixels est illustrée en figure 14C.

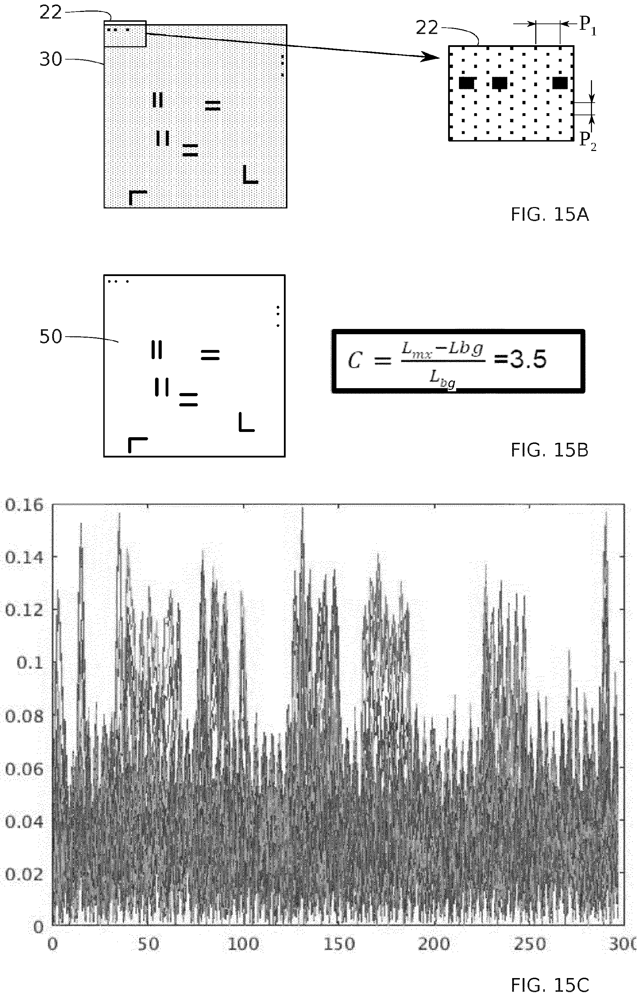

Dans le troisième exemple, illustré en figure 15A, L = 28,13μm et Nbpix = 300. L'image 50 reconstruite numériquement est illustrée en figure 15B. Le contraste obtenu est égal à 3,5. L'intensité lumineuse en fonction de la position des pixels est illustrée en figure 15C.

Il ressort clairement de ces exemples que le champ objet, respectivement image, défini par l'ensemble des points de l'objet traversé par les rayons lumineux incidents, impacte par sa dimension latérale la résolution et le contraste de l'image reconstruite à partir de l'hologramme 41. Plus le capteur 40 est grand, plus le contraste et le rapport signal sur bruit sont élevés.

Selon un mode de réalisation, les motifs 31 du réseau 32 sont des éléments conducteurs de chaleur ou des éléments produisant de la chaleur. Dans le premier cas, les motifs peuvent être métalliques. Ils peuvent être constitués entièrement ou partiellement de tungstène. Leur température s'élève et dégage la chaleur lorsqu'ils sont en conduction avec une source de chaleur. Dans le deuxième cas, on peut prévoir, par exemple, que les motifs soient des éléments résistifs qui génèrent de la chaleur lorsqu'ils sont alimentés en électricité.

Dans ces deux modes de réalisation, il est alors possible de rendre le réseau 32 chauffant. Cela permet de détruire certaines particules qui ont une température d'évaporation ou de fusion plus basse que la température générée par le réseau 32. Tel est le cas des particules organiques. Le chauffage réseau 32 permet ainsi d'éliminer ces particules fusibles sans pour autant dégrader d'autres particules qui elles ne sont pas fusibles ou sont fusibles à une température plus élevée.

Typiquement, cela permet d'éliminer les particules organiques sans pour autant dégrader des particules métalliques. Il est alors possible de différencier ces particules en réalisant des enregistrements successifs d'hologrammes. Certains hologrammes sont enregistrés sans application de chaleur par le réseau 32, ce qui permet d'identifier les particules organiques et potentiellement d'autres particules telles que des particules métalliques. D'autres hologrammes sont enregistrés avec application de chaleur par le réseau 32, ce qui permet d'identifier uniquement les particules non organiques.

Un autre avantage lié au chauffage de la structure diffractée est qu'il est possible de dégrader et d'éliminer les particules qui seraient amenées à se coller sur le réseau 32. Cela permet ainsi d'éviter l'accumulation de particules sur le réseau 32 en le nettoyant. Cette caractéristique répond ainsi à la problématique consistant à prolonger la durée de vie du dispositif et à maintenir sa sensibilité sur une longue période de temps.

Typiquement, le dispositif est configuré de sorte à ce que le réseau 32 atteigne une température de plusieurs centaines de degrés, typiquement d'au moins 150°C et de préférence au moins 300 °C, de préférence d'au moins 500°C et de préférence d'au moins 1000°C. Si les matériaux le permettent on peut aller au-delà de 1500°C, voire au-delà de 1700°C, voire à ou au-delà de 2400°C.

Par exemple, un support de quartz avec un réseau métallique de MoSi2 permet d'atteindre 1800°C sous air, sans détérioration des électrodes. Par ailleurs, la température peut aller jusqu'à 1700°C voire 2400°C pour des métaux réfractaires tels que le molybdène, ou le tungstène. L'homme de l'art pourra utiliser des alliages comme le disiliciure de molybdène MoSi2 ou le carbure de silicium SiC, notamment en raison d'un coût inférieur.

Les exemples décrits ci-dessus montrent clairement que l'invention est particulièrement efficace pour compter et analyser des particules de très petite taille, c'est-à-dire dont la taille est inférieure ou de l'ordre de la longueur d'onde.

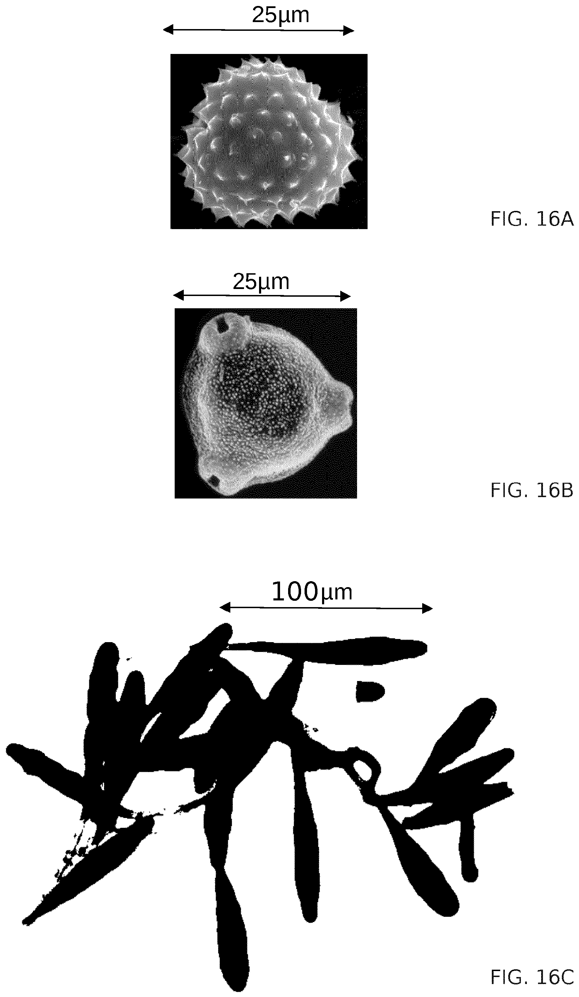

Par ailleurs, l'invention s'avère également très utile pour réaliser l'identification morphologique d'objets plus gros. Tel est le cas de pollens ou de moisissures. En effet, avec les solutions d'imagerie holographique de l'état de la technique, il est possible de compter des objets tels que les pollens. Néanmoins, il n'est pas possible de distinguer les différents types de pollens. Par exemple, les solutions connues ne permettent pas de distinguer un pollen d'ambroisie d'un pollen de bouleau. Les figures 16A et 16B sont des photos obtenues au microscope électronique à balayage (MEB) pour chacun de ces pollens respectivement. Ces pollens présentent sensiblement la même taille : 25 μm. Les solutions connues ne permettent pas de différencier ces pollens par imagerie holographique. Par conséquent, en pratique, on procède habituellement au prélèvement d'un échantillon puis à une photographie par MEB, puis au comptage de chacune des particules à partir de cette photo. Ce procédé est naturellement long et fastidieux. Par ailleurs, il rend impossible le comptage de ces pollens en temps réel ou en continu. Il n'est donc pas possible d'analyser un flux comportant potentiellement ces pollens.

Au contraire, le dispositif de détection décrit ci-dessus permet de reconstruire numériquement une image avec une résolution suffisamment bonne pour identifier la nature de chacun de ces pollens.

Par ailleurs, ce dispositif permet d'identifier des objets, parfois de forte taille qu'il est difficile de reconnaître par les techniques habituelles. Tel est le cas par exemple des moisissures conidiophores, dont la taille fait plusieurs centaines de micromètres, et dont un exemple et illustré en figure 16C.

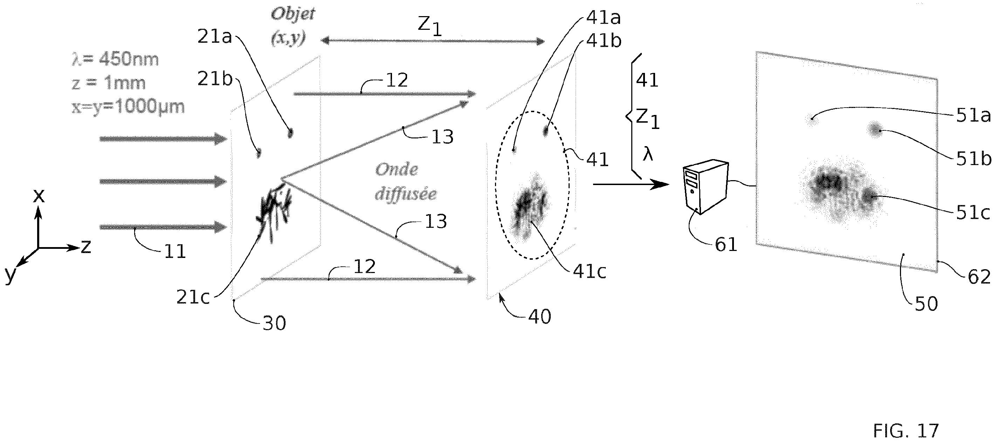

La figure 17 illustre un dispositif d'imagerie holographique, similaire aux solutions de l'état de la technique et utilisé pour analyser un échantillon comprenant un pollen d'ambroisie 21a, un pollen de bouleau 21b et une moisissure conidiophore 21c. Dans cet exemple, Z1=1mm, λ=450nm. L'imageur du capteur 40 est un carré dont les côtés mesurent 1000µm.

Dans cet exemple, le support 30 ne présente pas de réseau diffracté. L'objet 51 reconstruit numériquement à partir de l'hologramme 41 ne permet pas de reconnaître chacune de ces particules. Cet objet 51 reconstruit numériquement ne permet en fait pas d'obtenir une résolution supérieure à celle de l'hologramme 41 lui-même.

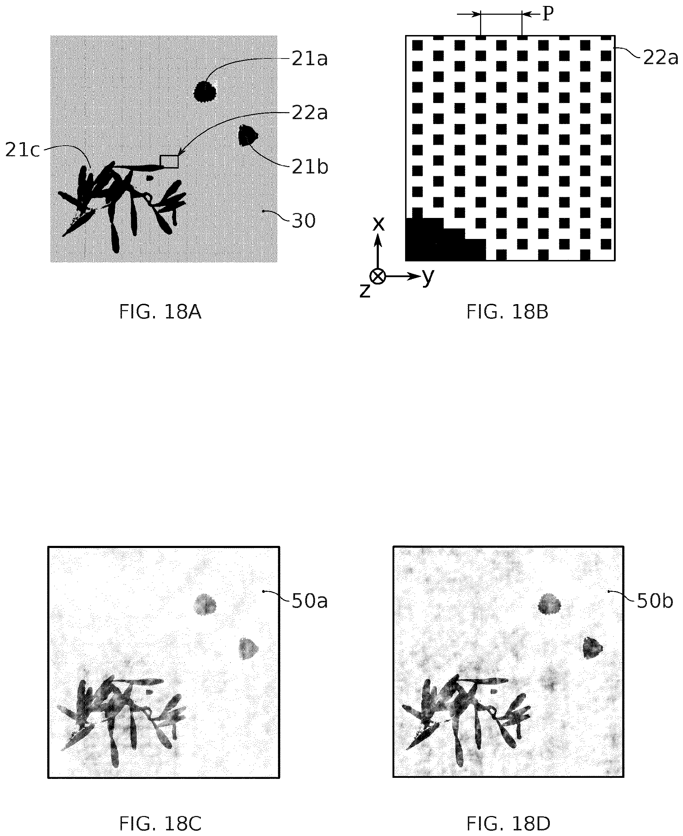

Un tout autre résultat est obtenu en analysant ce même échantillon 20 à l'aide d'un dispositif selon l'invention. Ce dispositif comprend un support 30 présentant deux réseaux entrelacés. Chaque réseau présente des motifs ponctuels, par exemple des plots de section circulaire, polygonale, rectangulaire ou carrée. Le pas Pa d'un premier réseau est égal à 500 nm, mesuré selon une direction verticale (x). Le pas Pb d'un deuxième réseau est égal à 1000 nm, mesuré selon une direction horizontale (y). Le support 30 et les particules 21a-21c sont illustrées en figure 18A, la figure 18B étant un agrandissement de la portion 22a de l'échantillon. La matrice de pixels du capteur 40 forme un carré de 250 µm de côté et comporte 1000 pixels par ligne.

En exposant l'échantillon avec une onde incidente de longueurs d'onde λa=500nm, on obtient une reconstruction numérique 50a de l'hologramme. Ce résultat est illustré en figure 18C. En exposant l'échantillon avec une onde incidente de longueurs d'onde λb=1000nm, on obtient une reconstruction numérique 50b de l'hologramme. Ce résultat est illustré en figure 18D. Sur chacune de ces images 50a, 50b reconstruites numériquement, la résolution est largement suffisante pour reconnaître la nature de chacune de ces particules 21a-21c.

Cet exemple montre clairement que le dispositif selon l'invention s'avère très efficace pour l'identification et l'analyse morphologique d'objets dont la taille est supérieure à la longueur d'onde d'exposition.

L'invention trouve également pour application particulièrement avantageuse, le comptage, l'identification de particules de très petite taille telle que des macromolécules comme l'ADN.

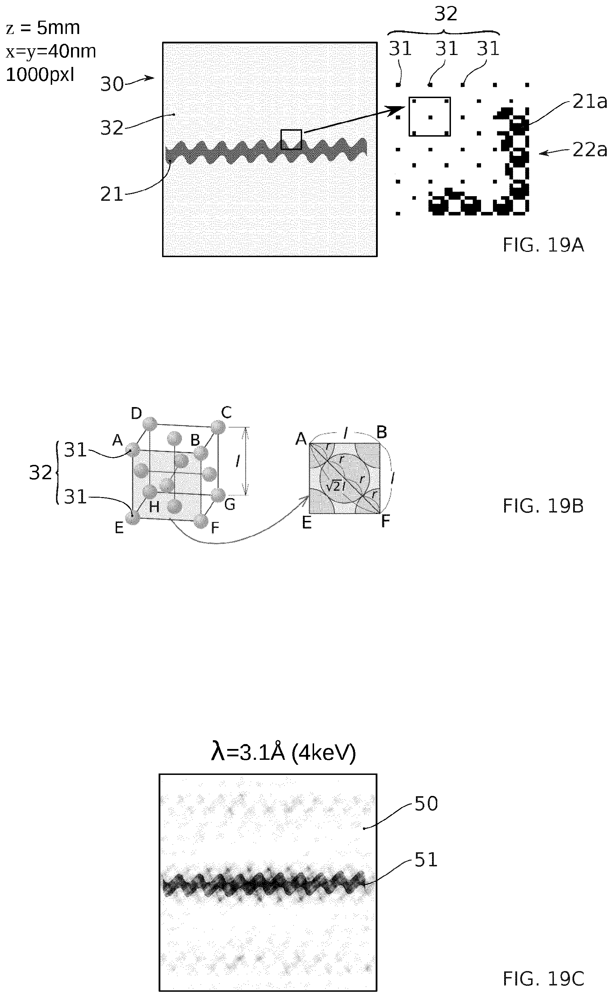

Pour réaliser un détecteur dont le réseau de diffraction 32 est adapté à cette taille de particules, on pourra prévoir que ce réseau soit formé par les atomes d'un réseau. De préférence, il s'agit d'un réseau cristallin, avantageusement monocristallin. Ce réseau cristallin est par exemple un réseau d'atomes de silicium. Une couche cristalline de silicium forme un réseau cubique à faces centrées (CfC). La période d'un réseau CfC de silicium est égale à la longueur l d'un côté du cube et est égale à 3,11 angströms (3,11 10$^{-10}$ m). Un tel réseau est illustré en figure 19B.

Selon un mode de réalisation avantageux, le réseau 32 est formé par une fine couche de silicium monocristallin formant une membrane.

Pour former une membrane de silicium <100>, on pourra par exemple se référer aux publications suivantes :

- Brevet US 8,501,026, intitulé "Method for Making a Planar Membrane", délivré le 6 aout 2013 et mentionnant comme inventeurs Christophe Constanciaset al.

- "Fabrication of large area ultrathin silicon membrane: Application for high efficiency extreme ultraviolet diffraction gratings", Constancias et al. J. Vac. Sci. Technol. B 281, Jan/Feb 2010.

- Fabrication of Buckling Free Ultrathin Silicon Membranes by Direct Bonding with Thermal Difference Florian Delachat, Christophe Constancias, Frank Fournel, Christophe Morales, Boris Le Drogoff, Mohamed Chaker, and Joelle Margot, ACS Nano, Just Accepted Manuscript DOI: 10.1021/acsnano.5b00234 • Publication Date (Web): 19 Mar 2015.

La figure 19A représente le support 30 portant un tel réseau 32. Une portion agrandie 22a illustre en détail les motifs 31 du réseau 32 ainsi qu'une portion d'un objet à analyser. Cet objet est ici un brin d'ADN 21. Sur cette représentation symbolique, le brin d'ADN présente un rayon de 2 nanomètres et un pas de 3,4 nanomètres.

On expose l'hélice 21 d'ADN à une onde incidente dont la longueur d'onde est de 3,11 angströms, c'est-à-dire environ égale au pas du réseau 32. La recombinaison de l'onde incidente 12 issue de la source 10 et se propageant à travers la structure 30 avec l'onde diffractée 13 par l'hélice 21 d'ADN et se propageant également au travers de la structure 30 forme une image holographique 41 sur le capteur 40. Le résultat 50 de la reconstruction numérique de cet hologramme 41 est illustré en figure 19C.

On constate que, sur cette image 50, il est possible d'analyser de façon précise l'hélice d'ADN 51.

En particulier, on peut mesurer le rayon et le pas de cette hélice.

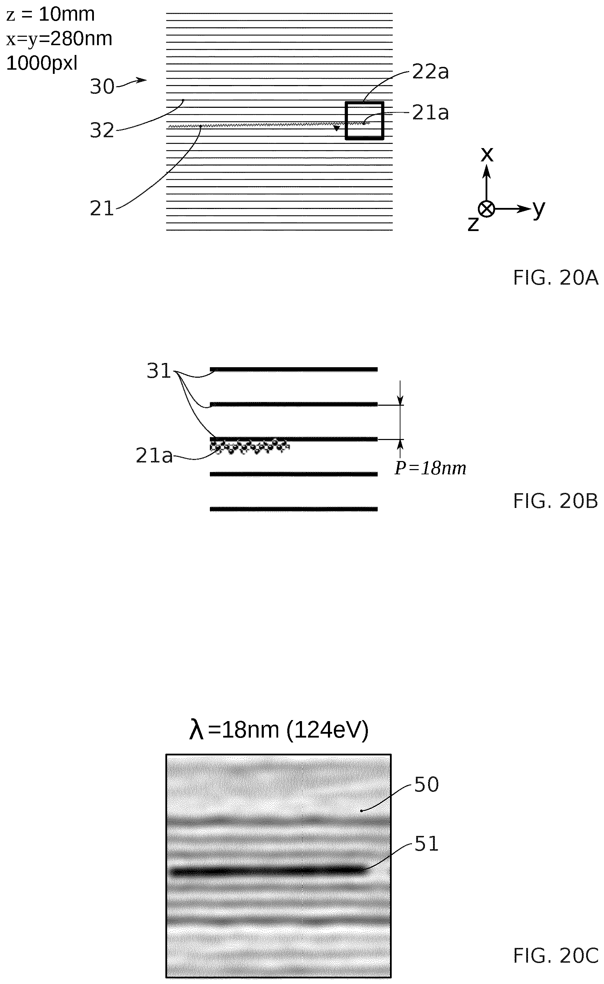

Les figures 20A à 20C illustrent un mode de réalisation d'un dispositif comprenant un réseau structuré, particulièrement bien adapté à l'analyse d'objets de petites tailles et s'étendant principalement selon une seule direction. Tel est le cas par exemple d'une macromolécule comme l'ADN. Dans cet exemple, le brin d'ADN forme une hélice dont la longueur est égale à 253 nanomètres, le rayon est égal à 2 nanomètres, le pas est égal à 3,4 nanomètres.

On pourra pour cela structurer un réseau de lignes parallèles de sorte à ce que l'objet à analyser soit disposé entre deux lignes parallèles. On peut ainsi précisément maîtriser la position de l'objet. Par ailleurs, cela permet de maîtriser cette position lors d'une manipulation ou d'un transport du dispositif contenant l'échantillon à analyser.

Afin de réaliser un tel réseau, on peut, par exemple, recourir aux techniques de lithographie nanométrique telle que la lithographie par faisceau d'électrons (Ebeam), la lithographie par auto-organisation de copolymères à blocs, technique habituellement qualifiée par l'acronyme DSA (Directed Self-Assembly). À ce jour, la période la plus petite pour réaliser des réseaux périodiques en anneau lithographie et de 18 nanomètres voire 10 nanomètres.

Pour des réseaux dont les tailles sont un peu supérieures, on pourra recourir aux techniques classiques de lithographie et, en particulier, aux techniques de nanoimpression qui permettent d'obtenir des résolutions élevées, de l'ordre de quelques dizaines de nanomètres.

Dans l'exemple illustré en figure 20A et dont une portion 22a agrandie est illustrée en figure 20B, le réseau 32 de diffraction du support 30 présente des motifs en lignes parallèles s'étendant selon la direction y.

Dans cet exemple non limitatif, le pas P du réseau 32 est de 18 nanomètres. Le support 30 présente une forme carrée dont la longueur d'un côté est de 280 nanomètres. La distance Z1 entre le support 30 et le capteur 40 d'image est de 10 millimètres. Le capteur 40 d'image comprend 1000 pixels par ligne.

Avec ce dispositif, en émettant une onde incidente dont la longueur d'onde $\lambda$ est proche du pas du réseau 32, c'est-à-dire 18 nanomètres dans ce cas et avec une énergie de 124eV, on obtient un hologramme sur le capteur 40 d'image. L'objet 50 reconstruit numériquement à partir de cet hologramme est illustré en figure 20C. Sur cette figure, on distingue clairement l'hélice d'ADN 51. On peut aisément en mesurer la longueur. En revanche, afin de mesurer précisément le rayon et le pas de cette hélice 51, il faudrait disposer d'une source permettant d'émettre une onde dont la longueur d'onde serait inférieure pour s'approcher de la dimension critique, ici le rayon de l'hélice d'ADN 51.

A titre d'exemple non limitatif, on pourra pour cela recourir à des systèmes dont les sources de quelques kev sont les anodes métalliques bombardées par des électrons. Les anodes constituées des métaux de transition comme Co, Cu, Ga, Mo, Ag produisent des rayons X de 6 à 22 keV. On peut également recourir à des sources synchrotron qui permettent de produire tout type de RX.

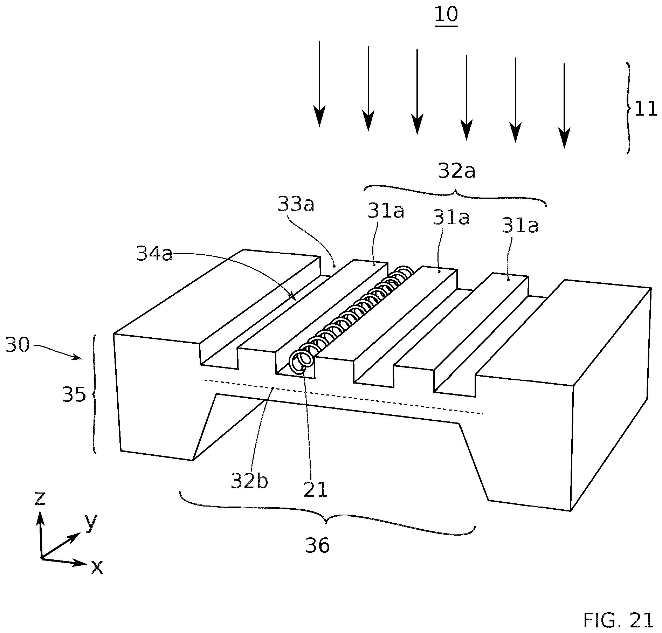

La figure 21 illustre, de manière simplifiée, un support 30 comprenant une couche 35 dont une portion 36 est suffisamment fine (selon l'axe z) pour laisser passer une onde incidente 11. Cette portion 36 est structurée de sorte à former un réseau 32a de diffraction. Ce réseau 32a comprend des tranchées 33a, séparées les unes des autres par des motifs 31a en relief formant des nervures. Les tranchées 33a et les nervures sont disposées en alternance et s'étendent parallèlement les unes aux autres selon la direction y. Le fond 34 des tranchées 33a peut servir à recevoir un objet tel qu'un brin d'ADN 21. Ce support 30 est exposé à une onde incidente 11.

Ce mode de réalisation permet de confiner l'objet à analyser et à le maintenir en place lors d'une manipulation d'un transport. Par ailleurs, le réseau 32a a une fonction de diffraction en plus de sa fonction de maintien du brin d'ADN. Plus précisément dans ce cas, le réseau 32a aura une fonction de diffraction aux petits angles.

Selon un mode de réalisation particulièrement avantageux, la couche 35 est faite de silicium monocristallin. La portion 36 peut alors former une membrane de silicium qui forme un réseau périodique d'atomes.

Ainsi, le support 30 comprend un réseau 32b, dans cet exemple un réseau CfC formé des atomes de silicium, en plus du réseau 32a formé par la structuration de la couche 35. Le support 30 comprend ainsi deux réseaux 32a, 32b superposées sur l'axe de propagation z de la lumière.

Cette structure permet ainsi d'obtenir une très bonne résolution, en particulier pour les dimensions critiques de petites tailles, grâce au réseau 32b formé par les atomes de la couche, et un autre réseau 32a qui permet de maîtriser la position de l'objet à analyser.

Naturellement, ce mode de réalisation est applicable à tout autre matériau que le silicium et qui permettrait de structurer la surface de la couche 35, et éventuellement de réaliser dans son épaisseur un réseau périodique d'atomes.

Selon un autre mode de réalisation, le réseau 32a peut aussi être posé sur une membrane silicium. Par exemple, il peut s'agir d'un réseau en silice (oxyde de silicium) réalisé par lithographie électronique (Ebeam) sur une résine fox ® ou HSQ hydrogen silsesquioxane, une silice sol gel qui se transforme en silice après exposition à un faisceau d'électrons par lithographie électronique Ebeam, développement et recuit.

Dans les exemples illustrés ci-dessus, le dispositif de détection comporte un unique support 30. Le support 30 comporte éventuellement plusieurs réseaux de diffraction superposés. Néanmoins, ces réseaux de diffraction sont en contact les uns avec les autres ou tout au moins ils ne permettent pas le passage de particules entre les différents réseaux.

Les paragraphes ci-dessous décrivent un mode de réalisation avec plusieurs supports comportant chacun au moins un réseau de diffraction, de sorte que les réseaux de diffraction soient espacés les uns des autres, de manière à permettre le passage de particules entre deux réseaux adjacents.

Comme illustré en figure 23, on peut prévoir de disposer plusieurs supports 30a-30d comportant des réseaux 32a-32d de diffraction le long de l'axe de propagation des rayons. Dans le mode de réalisation illustré, de type transmission en ligne, ces différents supports 30a-30d, et donc leurs réseaux 32a-32d, sont alignés selon l'axe de propagation z. Ainsi, chaque réseau se trouve une distance Z1 du capteur 40 d'image. Sur l'exemple non limitatif illustré en figure 23, le dispositif de détection comporte quatre support 30a-30d, situés respectivement des distances Z1a, Z1b, Z1c et Z1d du capteur 40 d'image.

Ces différents supports 30a-30d sont espacés les uns des autres. Les distances Dab, Dbc et Dcd sont mesurées selon l'axe de propagation z et sont illustrées en figure 23.

Par ailleurs, le dispositif de détection est configuré pour que deux réseaux canalisent un volume de détection pouvant comprendre des particules. Ainsi, de réseaux 32 adjacents définissent entre une portion de volume de détection formant un canal 70. Le dispositif de détection présente ainsi plusieurs canaux 70. Cela est particulièrement avantageux lorsqu'un flux de fluide transportant des particules se trouve canalisées par ces différents canaux 70. Les flèches F1 illustre le sens d'écoulement du fluide transportant les particules 21a-21d.

La présence de cette pluralité de réseaux 32a-32d est ainsi particulièrement avantageuse, puisque pour un volume de détection important, chaque particule 21a-21c se trouve à proximité immédiate de l'un des réseaux. La distance Z2 entre chaque particule est l'un des réseaux 32a-32d est ainsi plus petite. Elle peut donc être approximée plus aisément.

La reconstruction numérique de l'image peut alors s'effectuer en faisant varier la distance Z1 prise en compte dans le calcul. Cela permet de restituer les particules en position et en morphologie.

On notera que toutes les caractéristiques, effets techniques et avantages mentionnés en correspondance avec des modes de réalisation comprenant un unique réseau de diffraction sont parfaitement applicables et combinables aux modes de réalisation comprenant plusieurs réseaux de diffraction en série.

Naturellement, ce mode de réalisation avec plusieurs réseaux de diffraction peut présenter au moins deux réseaux de diffraction, trois réseaux de diffraction, voire quatre réseaux ou plus de diffraction.

Par ailleurs, ce mode de réalisation avec plusieurs supports comportant chacun au moins un réseau de diffraction n'est pas limitatif d'un type de réseau de diffraction et toute structure périodique peut être envisagée. Par exemple, on peut prévoir que chaque support présente plusieurs réseaux de diffraction superposés, juxtaposées ou entrelacées. Les réseaux de diffraction d'un même support ne permettent pas le passage entre eux de particules. En revanche, les particules peuvent passer entre les réseaux de diffraction appartenant à deux supports 30 adjacents.

Au vu de la description qui précède, il apparaît clairement que le dispositif proposé offre une solution particulièrement efficace pour améliorer le comptage, l'identification et l'analyse d'objets de tailles micromètriques mais également d'objets de tailles nanométriques.

L'invention n'est pas limitée aux modes de réalisation précédemment décrits et s'étend à tous les modes de réalisation couverts par les revendications.

## Revendications

1.  Dispositif de détection d'au moins un objet (21) le dispositif comportant :

    - une source de lumière (10) configurée pour émettre des ondes incidentes (11) à une longueur d'onde $\lambda$,
    - un volume de détection destiné à recevoir l'objet (21), et à recevoir les ondes incidentes (11),
    - un capteur d'image (40) positionné pour recevoir au moins des ondes diffusées (13) obtenue par diffusion des ondes incidentes (11) sur l'objet (21) et des ondes de référence (12) correspondant aux ondes incidentes (11) n'ayant pas diffusées sur l'objet (21), le capteur étant configuré pour générer une image holographique (41) fonction au moins des ondes diffusées (13) et des ondes de référence (12),
    - un dispositif informatique (61) de traitement de données configuré pour reconstruire numériquement l'objet en fonction au moins de l'image holographique (41) et de la longueur d'onde $\lambda$, **caractérisé en ce que** le dispositif comprend également au moins un support (30) comprenant des motifs (31) organisés pour former au moins un réseau (32) de diffraction périodique présentant un pas **P,** tel que $\lambda/2 \leq P \leq 2\lambda$, de sorte que les ondes diffusées (13) collectées par le capteur (40) comprennent:

        - des ondes issues de la source (10) qui ont été diffusées par l'objet (21) sans être diffractées par l'au moins un réseau (32) de diffraction, et
        - des ondes issues de la source (10) qui ont à la fois été diffractées par l'au moins un réseau (32) de diffraction et ont à la fois été diffusées par l'objet (21)

les ondes de référence (12) étant des ondes incidentes (11) ayant ou non été diffractées par le réseau de diffraction (32). et dans lequel le dispositif informatique (61) est configuré pour reconstruire numériquement l'objet en fonction au moins de l'image holographique (41), de la longueur d'onde $\lambda$ et d'une distance Z1 entre le support (30) et le capteur d'image (40), la distance Z1 étant de préférence prise selon un axe de propagation z de l'onde incidente (11).

2. Dispositif selon la revendication précédente, dans lequel le réseau (32) présente un pas P compris entre 0,75*$\lambda$ et 1,5*$\lambda$.

3. Dispositif selon la revendication précédente, dans lequel le réseau (32) présente un pas P égal à $\lambda$.

4. Dispositif selon l'une quelconque des revendications précédentes, dans lequel le réseau (32) est un réseau en deux dimensions, selon une première dimension du réseau (32) le réseau présente un pas Pa et selon une deuxième dimension du réseau (32), prise dans un plan perpendiculaire à la première dimension, le réseau présente un pas Pb, avec Pa et Pb tels que $\lambda/2 \leq$ Pa $\leq 2\lambda$ et $\lambda/2 \leq$ Pb $\leq 2\lambda$.

5. Dispositif selon l'une quelconque des revendications 1 à 3, dans lequel le support (30) comprend des motifs (31a, 31b) organisés de sorte à former au moins deux réseaux (32a, 32b) de diffraction périodiques, parmi lesquels un premier réseau (32a) présentant un pas Pa, et un deuxième réseau (32b) présentant un pas Pb, avec Pa et Pb tels que Pa$\neq$Pb, $\lambda/2 \leq$ Pa $\leq 2\lambda$ et $\lambda/2 \leq$ Pb $\leq 2\lambda$.

6. Dispositif selon la revendication précédente, dans lequel la source de lumière (10) est configurée pour émettre au moins une première onde incidente (11a) et une deuxième onde incidente (11b), présentant respectivement une longueur d'onde $\lambda$a et $\lambda$b, telles que $\lambda$a/2$\leq$ Pa $\leq 2\lambda$a et $\lambda$b/2$\leq$ Pb $\leq 2\lambda$b, de préférence 0,75*$\lambda$a/2$\leq$ Pa $\leq$1,5*$\lambda$a et 0,75*$\lambda$b/2$\leq$ Pb $\leq$1,5*$\lambda$b et de préférence $\lambda$a=Pa et $\lambda$b=Pb.

7. Dispositif selon l'une quelconque des deux revendications précédentes, dans lequel les au moins deux réseaux (32a, 32b) sont situés sur des zones (30a, 30b) distinctes du support.

8. Dispositif selon l'une quelconque des trois revendications précédentes, dans lequel les au moins deux réseaux (32a, 32b) sont en partie au moins et de préférence entièrement superposés en projection sur un plan perpendiculaire à ladite direction de propagation z ou dans lequel les au moins deux réseaux (32a, 32b) sont en partie au moins et de préférence entièrement entrelacés.

9. Dispositif selon l'une quelconque des revendications précédentes, dans lequel les motifs (31) du réseau (32) sont réalisés en un matériau diélectrique.

10. Dispositif selon l'une quelconque des revendications 1 à 8, dans lequel, les motifs (31) du réseau (32) sont réalisés en un matériau présentant un coefficient de conduction de chaleur supérieur ou égal à 5 W.m$^{-1}$.K$^{-1}$, les motifs (31) du réseau (32) étant de préférence réalisés en un matériau métallique tel que le tungstène, et de préférence dans lequel les motifs (31) du réseau (32) forment des éléments chauffants lorsqu'ils sont alimentés en électricité.

11. Dispositif selon l'une quelconque des revendications 1 à 8, dans lequel, le réseau (32) comprend, ou est uniquement formé par, au moins un réseau cristallin, les motifs (32) du réseau étant formés, en partie au moins, par des atomes du réseau cristallin et dans lequel, de préférence, le support (30) comprend une couche présentant une face structurée de sorte à former un premier réseau (32a) de motifs (31a) en reliefs et un deuxième réseau (32b) formé par ledit réseau cristallin.

12. Dispositif selon l'une quelconque des revendications précédentes, dans lequel l'objet présente une dimension critique CD, avec :

   - soit, CD est inférieure ou égale à $\lambda$,
   - soit, CD est telle que CD$\geq$2*$\lambda$ et de préférence CD$\geq$10*$\lambda$.

13. Dispositif selon l'une quelconque des revendications précédentes, dans lequel le support (30) comprend des ouvertures (37) situées entre les motifs (31).

14. Dispositif selon l'une quelconque des revendications précédentes, comprenant une pluralité de supports (30a-30d) disposés en série, espacés les uns des autres le long de l'axe de propagation z et comprenant chacun au moins un réseau (32a-32d) de diffraction, de sorte que l'au moins un objet (21) présent dans le volume de détection soit situé entre les réseaux (32a-32d) de deux supports (30) adjacents.

15. Système comprenant au moins un dispositif selon l'une quelconque des revendications précédentes dans lequel le système est pris parmi :

   - un système d'alarme anti-incendie,
   - un système de détection d'incendie,
   - un système d'analyse de la qualité d'un fluide tel que l'air ou l'eau,

- un système d'alarme anti-pollution,
- un système de détection de poudre d'explosifs,
- un système de détection d'espèces microbiologiques,
- un système d'analyse de l'ADN,
- un système d'analyse de pollens,
- un système d'analyse de moisissures.

**Patentansprüche**

1.  Vorrichtung zum Detektieren mindestens eines Objekts (21), wobei die Vorrichtung Folgendes umfasst:

    - eine Lichtquelle (10), die so eingerichtet ist, dass sie einfallende Wellen (11) mit einer Wellenlänge $\lambda$ aussendet,
    - ein Detektionsvolumen, das dazu bestimmt ist, das Objekt (21) aufzunehmen und die einfallenden Wellen (11) zu empfangen,
    - einen Bildsensor (40), der so positioniert ist, dass er mindestens gestreute Wellen (13) empfängt, die durch Streuung der auf das Objekt (21) einfallenden Wellen (11) und der Referenzwellen (12), die den Einfallswellen (11) entsprechen und nicht auf das Objekt (21) gestreut wurden, erhalten werden, wobei der Sensor so eingerichtet ist, dass er ein holografisches Bild (41) in Abhängigkeit mindestens von den gestreuten Wellen (13) und den Referenzwellen (12) erzeugt,
    - eine Datenverarbeitungsvorrichtung (61), die so eingerichtet ist, dass sie das Objekt in Abhängigkeit mindestens von dem holografischen Bild (41) und der Wellenlänge $\lambda$ digital rekonstruiert,
    **dadurch gekennzeichnet, dass** die Vorrichtung auch mindestens einen Träger (30) umfasst, der Muster (31) umfasst, die so angeordnet sind, dass sie mindestens ein periodisches Beugungsgitter (32) bilden, das eine Teilung P aufweist, wie $\lambda/2 \leq P \leq 2\lambda$, so dass die vom Sensor (40) erfassten gestreuten Wellen (13) Folgendes umfassen:

        - von der Quelle (10) stammende Wellen, die vom Objekt (21) gestreut wurden, ohne von dem mindestens einen Beugungsgitter (32) gebeugt zu werden, und
        - von der Quelle (10) stammende Wellen, die sowohl von dem mindestens einen Beugungsgitter (32) gebeugt als auch von dem Objekt (21) gestreut wurden,

    wobei die Referenzwellen (12) einfallende Wellen (11) sind, die vom Beugungsgitter (32) gebeugt wurden oder nicht,
    und wobei die Datenverarbeitungsvorrichtung (61) so eingerichtet ist, dass sie das Objekt in Abhängigkeit mindestens von dem holografischen Bild (41), der Wellenlänge $\lambda$ und einem Abstand Z1 zwischen dem Träger (30) und dem Bildsensor (40) digital rekonstruiert, wobei der Abstand Z1 vorzugsweise entlang einer Ausbreitungsachse z der einfallenden Welle (11) genommen wird.

2.  Vorrichtung nach dem vorhergehenden Anspruch, wobei das Gitter (32) eine Teilung P zwischen $0{,}75 * \lambda$ und $1{,}5 * \lambda$ aufweist.

3.  Vorrichtung nach dem vorhergehenden Anspruch, wobei das Gitter (32) eine Teilung P gleich $\lambda$ aufweist.

4.  Vorrichtung nach einem der vorhergehenden Ansprüche, wobei das Gitter (32) ein zweidimensionales Gitter ist, wobei gemäß einer ersten Dimension des Gitters (32) das Gitter eine Teilung Pa aufweist und gemäß einer zweiten Dimension des Gitters (32), die in einer Ebene senkrecht zur ersten Dimension genommen wird, das Gitter eine Teilung Pb aufweist, wobei Pa und Pb derart sind, dass $\lambda/2 \leq$ Pa $\leq 2\lambda$ und $\lambda/2 \leq$ Pb $\leq 2\lambda$.

5.  Vorrichtung nach einem der Ansprüche 1 bis 3, wobei der Träger (30) Muster (31a, 31b) umfasst, die so angeordnet sind, dass sie mindestens zwei periodische Beugungsgitter (32a, 32b) bilden, darunter ein erstes Gitter (32a), das eine Teilung Pa aufweist, und ein zweites Gitter (32b), das eine Teilung Pb aufweist, wobei Pa und Pb derart sind, dass Pa$\neq$Pb, $\lambda/2 \leq$ Pa $\leq 2\lambda$ und $\lambda/2 \leq$ Pb $\leq 2\lambda$.

6.  Vorrichtung nach dem vorhergehenden Anspruch, wobei die Lichtquelle (10) so eingerichtet ist, dass sie mindestens eine erste einfallende Welle (11a) und eine zweite einfallende Welle (11b) aussendet, die eine Wellenlänge $\lambda$a bzw. Ab aufweisen, wobei $\lambda$a/2$\leq$ Pa $\leq 2\lambda$a und $\lambda$b/2$\leq$ Pb $\leq 2\lambda$b, vorzugsweise $0{,}75 * \lambda$a/2$\leq$ Pa $\leq 1{,}5 * \lambda$a und $0{,}75 * \lambda$b/2$\leq$ Pb $\leq 1{,}5 * \lambda$b und vorzugsweise Aa=Pa und Ab=Pb.

7.  Vorrichtung nach einem der beiden vorhergehenden Ansprüche, wobei sich die mindestens zwei Gitter (32a, 32b) in Bereichen (30a, 30b) befinden, die von dem Träger getrennt sind.

8.  Vorrichtung nach einem der drei vorhergehenden Ansprüche, wobei die mindestens zwei Gitter (32a, 32b) in einer Projektionsebene senkrecht zu der Ausbreitungsrichtung z mindestens teilweise und vorzugsweise vollständig übereinander liegen oder wobei die mindestens zwei Gitter (32a, 32b) mindestens teilweise und vorzugsweise vollständig verschachtelt sind.

**9.** Vorrichtung nach einem der vorhergehenden Ansprüche, wobei die Muster (31) des Gitters (32) aus einem dielektrischen Material hergestellt sind.

**10.** Vorrichtung nach einem der Ansprüche 1 bis 8, wobei die Muster (31) des Gitters (32) aus einem Material hergestellt sind, das einen Wärmeleitkoeffizienten von größer gleich 5W.m$^{-1}$.K$^{-1}$ aufweist, wobei die Muster (31) des Gitters (32) vorzugsweise aus einem metallischen Material wie Wolfram hergestellt sind, und wobei vorzugsweise die Muster (31) des Gitters (32) Heizelemente bilden, wenn sie mit Elektrizität versorgt werden.

**11.** Vorrichtung nach einem der Ansprüche 1 bis 8, wobei das Gitter (32) mindestens ein Kristallgitter umfasst oder nur durch dieses gebildet wird, wobei die Muster (32) des Gitters mindestens teilweise durch Atome des Kristallgitters gebildet werden, und wobei vorzugsweise der Träger (30) eine Schicht umfasst, die eine derart strukturierte Seite aufweist, dass sie ein erstes Gitter (32a) von Reliefmustern (31a) und ein zweites Gitter (32b), das durch das Kristallgitter gebildet wird, bildet.

**12.** Vorrichtung nach einem der vorhergehenden Ansprüche, wobei das Objekt eine kritische Abmessung CD aufweist, wobei:

     - entweder CD kleiner oder gleich $\lambda$ ist,
     - oder CD wie CD$\geq$2*$\lambda$ und vorzugsweise CD$\geq$10*$\lambda$ ist.

**13.** Vorrichtung nach einem der vorhergehenden Ansprüche, wobei der Träger (30) Öffnungen (37) umfasst, die sich zwischen den Mustern (31) befinden.

**14.** Vorrichtung nach einem der vorhergehenden Ansprüche, die eine Vielzahl von in Reihe angeordneten Trägern (30a-30d) umfasst, die entlang der Ausbreitungsachse z voneinander beabstandet sind und jeweils mindestens ein Beugungsgitter (32a-32d) umfassen, so dass sich das mindestens eine im Detektionsvolumen vorhandene Objekt (21) zwischen den Gittern (32a-32d) von zwei benachbarten Trägern (30) befindet.

**15.** System, das mindestens eine Vorrichtung nach einem der vorhergehenden Ansprüche umfasst, wobei das System aus Folgendem genommen wird:

     - einem Feueralarmsystem,
     - einem Branddetektionssystem,
     - einem System zur Analyse der Qualität eines Fluids wie Luft oder Wasser,
     - einem Schadstoffalarmsystem,
     - einem Sprengstoffpulver-Detektionssystem,
     - einem System zum Detektieren von mikrobiologischen Arten,
     - einem DNA-Analysesystem,
     - ein Pollenanalysesystem,
     - einem Schimmelpilz-Analysesystem.

**Claims**

**1.** Device for detecting at least one object (21), the device including:

     - a light source (10) configured to emit incident waves (11) at a wavelength $\lambda$,
     - a detection volume intended to receive the object (21), and to receive the incident waves (11),
     - an image sensor (40) positioned to receive at least scattered waves (13) obtained by scattering incident waves (11) on the object (21) and reference waves (12) corresponding to incident waves (11) not scattered on the object (21), the sensor being configured to generate a holographic image (41) based at least on the scattered waves (13) and on the reference waves (12),
     - a computer data processing device (61) configured to digitally reconstruct the object based at least on the holographic image (41) and the wavelength $\lambda$,
     **characterised in that** the device also comprises at least one support (30) comprising patterns (31) organised to form at least one periodic diffraction grating (32) having a pitch P, such that $\lambda/2 \leq P \leq 2\lambda$, so that the scattered waves (13) collected by the sensor (40) comprise:

         - waves from the source (10) which were scattered by the object (21) without being diffracted by the at least one diffraction grating (32), and
         - waves from the source (10) which were both diffracted by the at least one diffraction grating (32) and scattered by the object (21),

     the reference waves (12) being incident waves (11) having or not been diffracted by the diffraction grating (32),
     and wherein the computer device (61) is configured to digitally reconstruct the object based on at least the holographic image (41), of wavelength $\lambda$ and with a distance Z1 between the support (30) and the image sensor (40), the distance Z1 preferably been taken along a propagation axis z of the incident wave (11).

**2.** Device according to the preceding claim, wherein the grating (32) has a pitch P lying between 0.75*$\lambda$ and

1.5*λ.

3. Device according to the preceding claim, wherein the grating (32) has a pitch P equal to A.

4. Device according to any one of the preceding claims, wherein the grating (32) is a two-dimensional grating, according to a first dimension of the grating (32) the grating has a pitch Pa and according to a second dimension of the grating (32), taken in a plane perpendicular to the first dimension, the grating has a pitch Pb, with Pa and Pb such that $\lambda/2 \leq$ Pa $\leq 2\lambda$ and $\lambda/2 \leq$ Pb $\leq 2\lambda$.

5. Device according to any one of claims 1 to 3, wherein the support (30) comprises patterns (31a, 31b) organised so as to form at least two periodic diffraction gratings (32a, 32b), including a first grating (32a) having a pitch Pa, and a second grating (32b) having a pitch Pb, with Pa and Pb such that Pa≠Pb, $\lambda/2 \leq$ Pa $\leq 2\lambda$ and $\lambda/2 \leq$ Pb $\leq 2\lambda$.

6. Device according to the preceding claim, wherein the light source (10) is configured to emit at least a first incident wave (11a) and a second incident wave (11b), respectively having a wavelength $\lambda$a and Ab, such that $\lambda a/2 \leq$ Pa $\leq 2\lambda$a and $\lambda b/2 \leq$ Pb $\leq 2\lambda$b, preferably $0.75*\lambda a/2 \leq$ Pa $\leq 1.5*\lambda$a and $0.75*\lambda b/2 \leq$ Pb $\leq 1.5*\lambda$b and preferably $\lambda$a=Pa and Ab=Pb.

7. Device according to either one of the preceding two claims, wherein the at least two gratings (32a, 32b) are located on distinct areas (30a, 30b) of the support.

8. Device according to any one of the preceding three claims, wherein the at least two gratings (32a, 32b) are at least partly and preferably entirely superimposed in projection on a plane perpendicular to said direction of propagation z or wherein the at least two gratings (32a, 32b) are at least partly and preferably entirely interlaced.

9. Device according to any one of the preceding claims, wherein the patterns (31) of the grating (32) are made of a dielectric material.

10. Device according to any one of claims 1 to 8, wherein the patterns (31) of the grating (32) are made of a material having a heat conduction coefficient greater than or equal to 5 Wm$^{-1}$.K$^{-1}$, the patterns (31) of the grating (32) preferably being made of a metallic material such as tungsten, and preferably wherein the patterns (31) of the grating (32) form heating elements when supplied with electricity.

11. Device according to any one of claims 1 to 8, wherein the grating (32) comprises, or is only formed by, at least one crystal lattice, the patterns (32) of the grating being formed, at least in part, by atoms of the crystal lattice, and wherein, preferably, the support (30) comprises a layer having a face structured so as to form a first grating (32a) of relief patterns (31a) and a second grating (32b) formed by said crystal lattice.

12. Device according to any one of the preceding claims, wherein the object has a critical dimension CD, with:

- either CD is less than or equal to $\lambda$,
- or CD is such that CD$\geq 2*\lambda$ and preferably CD$\geq 10*\lambda$.

13. Device according to any one of the preceding claims, wherein the support (30) comprises apertures (37) located between the patterns (31).

14. Device according to any one of the preceding claims comprising a plurality of supports (30a-30d) disposed in series, spaced from each other along the propagation axis z and each comprising at least one diffraction grating (32a-32d), so that the at least one object (21) present in the detection volume is located between the gratings (32a-32d) of two adjacent supports (30).

15. System comprising at least one device according to any one of the preceding claims, wherein the system is taken from:

- a fire alarm system,
- a fire detection system,
- a system for analysing the quality of a fluid such as air or water,
- an anti-pollution alarm system,
- a system for detecting powder of explosives,
- a system for detecting microbiological species,
- a DNA analysis system,
- a pollen analysis system,
- a mould analysis system.

FIG. 1

FIG. 2A

FIG. 2B

FIG. 2C

FIG. 3A

FIG. 3B

FIG. 3C

λ = 450nm
z = 1cm
x=y=50µm

$P_{30}$

$Z_1$

$P_0$

$\underline{10}$

12

13

*Onde diffusée*

13

12

41

$\{ \begin{array}{c} 41 \\ Z_1 \\ \lambda \end{array}$

41

40

51

61

50

62

63

60

14

11

20,21

30

32

31

X
Y
Z

26

EP 3 842 871 B1

FIG. 4

FIG. 5A

FIG. 5B

FIG. 5C

FIG. 6

$$C = \frac{L_{mx} - Lbg}{L_{bg}} = 0.5$$

FIG. 7A

$$C = \frac{L_{mx} - Lbg}{L_{bg}} = 4.3$$

FIG. 7B

$$C = \frac{L_{mx} - L_{bg}}{L_{bg}} = 1$$

FIG. 7C

$$C = \frac{L_{mx} - Lbg}{L_{bg}} = 5.5$$

FIG. 7D

FIG. 8A

FIG. 8B

$$C = \frac{L_{mx} - Lbg}{L_{bg}} = 6.8$$

FIG. 8C

$$C = \frac{L_{max} - Lbg}{L_{bg}} = 0.68$$

SBR=1.68

FIG. 9A

FIG. 9B

x

z ⊗ → y

T= 96%

—— 32

—— 22

—— 51

$C = \dfrac{L_{max} - Lbg}{L_{bg}} = 6.85$

SBR=7.85

FIG. 9C

FIG. 10A

$$C = \frac{L_{mx} - Lbg}{L_{bg}} = 5.9$$

FIG. 10B

FIG. 10C

$$C = \frac{L_{mx} - Lbg}{L_{bg}} = 5.9$$

FIG. 10D

FIG. 10E

FIG. 11A

FIG. 11B

FIG. 11C

FIG. 12A

FIG. 12B

FIG. 12C

FIG. 13A

FIG. 13B

$$C = \frac{L_{mx} - Lbg}{L_{bg}} = 7.6$$

FIG. 13C

FIG. 14A

$$C = \frac{L_{mx} - Lbg}{L_{bg}} = 7.1$$

FIG. 14B

FIG. 14C

FIG. 15A

$$C = \frac{L_{mx} - Lbg}{L_{bg}} = 3.5$$

FIG. 15B

FIG. 15C

25μm

FIG. 16A

25μm

FIG. 16B

100μm

FIG. 16C

FIG. 17

FIG. 18A

FIG. 18B

FIG. 18C

FIG. 18D

z = 5mm
x=y=40nm
1000pxl

FIG. 19A

FIG. 19B

λ=3.1Å (4keV)

FIG. 19C

z = 10mm
x=y=280nm
1000pxl

30

32

21

22a

21a

x

y

z

FIG. 20A

31

21a

P=18nm

FIG. 20B

λ=18nm (124eV)

50

51

FIG. 20C

FIG. 21

FIG. 22a

FIG. 22b

FIG. 22c

FIG. 23

FIG. 24

FIG. 25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- WO 2017178723 A
- US 8501026 B

**Littérature non-brevet citée dans la description**

- Practical algorithms for simulation and reconstruction of digital in-line holograms. *Applied Optics*, 2015, vol. 54 (9), 2424-2434
- Fabrication of large area ultrathin silicon membrane: Application for high efficiency extreme ultraviolet diffraction gratings. *Constancias et al. J. Vac. Sci. Technol. B*, February 2010, vol. 281
- **CHRISTOPHE CONSTANCIAS** ; **FRANK FOURNEL** ; **CHRISTOPHE MORALES** ; **BORIS LE DROGOFF** ; **MOHAMED CHAKER** ; **JOELLE MARGOT**. Fabrication of Buckling Free Ultrathin Silicon Membranes by Direct Bonding with Thermal Difference Florian Delachat. *ACS Nano*, 19 March 2015